# EUROPEAN PATENT APPLICATION

(11) **EP 4 328 868 A1**
(43) Date of publication of application: **28.02.2024**
(21) Application number: 23159225.4
(22) Date of filing: 28.02.2023
(51) Int. Cl.: G06V 10/82, G06V 20/70, G06F 16/242, G06F 16/95

(54) **AUTOMATED GENERATION AND USE OF BUILDING INFORMATION FROM ANALYSIS OF FLOOR PLANS AND ACQUIRED BUILDING IMAGES**

(30) Priority: 27.08.2022 US 202217897147
(71) Applicant: MFTB Holdco, Inc., Seattle, Washington 98101 (US)
(72) Inventor: Penner, Eric M, Centennial, CO 80112 (US); Khosravan, Naji, Seattle, WA 98121 (US); Kang, Sing Bing, Redmond, WA 98052 (US); Wang, Lichen, Bellevue, WA, 98005 (US); Bessinger, Zachary S, Crestwood, KY 40014 (US)
(74) Representative: Loveless, Ian Mark

(57) **Abstract**

Techniques are described for using computing devices to perform automated operations for automatically generating information about attributes of buildings from automated analysis of building information that includes floor plans and acquired building images and to subsequently using the generated building information in one or more further automated manners. In some situations, such automated generation of building information includes automatically determining objects in a building and other attributes of the building, and automatically generating descriptions about the determined building attributes. Information about such determined attributes and generated descriptions may be used in various automated manners, including for updating and/or validating information in existing building descriptions, for determining matching buildings that have similarities to indicated building descriptions or other specified criteria, for controlling device navigation (e.g., autonomous vehicles), for display on client devices in corresponding graphical user interfaces, etc.

## Description

### TECHNICAL FIELD

The following disclosure relates generally to techniques for automatically generating and using information about building attributes from automated analysis of building floor plans and acquired building images, such as to use generated building attribute information for improved identification and navigation of buildings.

### BACKGROUND

In various fields and circumstances, such as architectural analysis, property inspection, real estate acquisition and development, general contracting, improvement cost estimation, etc., it may be desirable to know the interior of a house, office, or other building without having to physically travel to and enter the building. However, it can be difficult to effectively capture, represent and use such building interior information, including to identify buildings that satisfy criteria of interest, and including to display visual information captured within building interiors to users at remote locations (e.g., to enable a user to fully understand the layout and other details of the interior, including to control the display in a user-selected manner). In addition, while a floor plan of a building may provide some information about layout and other details of a building interior, such use of floor plans has some drawbacks, including that floor plans can be difficult to construct and maintain, to accurately scale and populate with information about room interiors, to visualize and otherwise use, etc.

Similarly, descriptions of buildings are often inaccurate and/or incomplete, such as to lack details about various attributes of the buildings, to include information that is incorrect or misleading, etc.

### BRIEF DESCRIPTION OF THE DRAWINGS

Figure 1A includes diagrams depicting an exemplary building interior environment and computing system(s) for use in embodiments of the present disclosure, including to generate and use information representing the building, such as based at least in part on attribute-based assessments of buildings' floor plans and acquired images.
Figure 1B illustrates examples of types of building description information.
Figures 2A-2N illustrate examples of automatically generating information about building attributes from automated analysis of building information and subsequently using the generated building attribute information in one or more automated manners.
Figure 3 is a block diagram illustrating computing systems suitable for executing an embodiment of a system that performs at least some of the techniques described in the present disclosure.
Figures 4A-4B illustrate an example embodiment of a flow diagram for a Building Attribute Determination and Usage Manager (BADUM) system routine in accordance with an embodiment of the present disclosure.
Figure 5 illustrates an example embodiment of a flow diagram for an Image Capture and Analysis (ICA) system routine in accordance with an embodiment of the present disclosure.
Figures 6A-6B illustrate an example embodiment of a flow diagram for a Mapping Information Generation Manager (MIGM) system routine in accordance with an embodiment of the present disclosure.
Figure 7 illustrates an example embodiment of a flow diagram for a Building Information Access system routine in accordance with an embodiment of the present disclosure.

### DETAILED DESCRIPTION

The present disclosure describes techniques for using computing devices to perform automated operations related to automatically generating information about attributes of buildings from analysis of building information that includes floor plans and acquired building images, and to subsequently using the generated building information in one or more further automated manners, such as for improved identification and navigation of buildings (e.g., controlling navigation of mobile devices such as autonomous vehicles in the buildings). The automated techniques may include automatically determining structural elements and other attributes of a building from automated analysis of information about the building (*e.g.*, floor plans and/or acquired images for the building), such as by using one or more trained machine learning models (e.g., trained neural networks) - such a floor plan may, in at least some embodiments, be for an as-built multi-room building (*e.g*., a house, office building, etc.) that is generated from or otherwise associated with panorama images or other images (*e.g.*, rectilinear perspective images) acquired at acquisition locations in and around the building (*e.g.*, without having or using information from any depth sensors or other distance-measuring devices about distances from an image's acquisition location to walls or other objects in the surrounding building). The automated techniques may further include automatically generating descriptions about the determined building attributes, such as by using one or more trained language models, and updating and/or validating information in existing building descriptions based on the automatically determined attributes and/or the automatically generated descriptions, and in some cases further using the automatically determined attributes and/or the automatically generated descriptions to assist in determining matching buildings that have similarities to indicated building descriptions or other specified criteria. Information about automatically determined attributes and/or about the automatically generated descriptions and/or a matching building may be further used in various manners, such as for display or other presentation on one or more client devices in corresponding GUIs (graphical user interfaces), including to enable virtual navigation of an indicated building. Additional details are included below regarding automated generation and use of information about attributes of buildings from automated analysis of building information, and some or all techniques described herein may, in at least some embodiments, be performed via automated operations of a Building Attribute Determination and Usage Manager ("BADUM") system, as discussed further below.

As noted above, automated operations of a BADUM system may in at least some embodiments include automatically analyzing visual data of images acquired in and around a building and optionally associated image acquisition metadata (*e.g.*, orientation information for an image, such as using heading information from a compass sensor, location information from a GPS sensor, etc.) to determine attributes of the building, including in at least some situations by using one or more trained machine learning models (*e.g.*, one or more trained neural networks) to determine attributes that reflect characteristics of individual rooms or other areas of the building, such as corresponding to structural elements and other objects identified in the rooms and/or characteristics or other attributes of the objects and the rooms. In at least some embodiments and situations, some or all of the images acquired for a building may be panorama images that are each acquired at one of multiple acquisition locations in or around the building, such as to generate a panorama image at each such acquisition location from one or more of a video at that acquisition location (*e.g*., a 360° video taken from a smartphone or other mobile device held by a user turning at that acquisition location), or multiple images acquired in multiple directions from the acquisition location (*e.g*., from a smartphone or other mobile device held by a user turning at that acquisition location), or a simultaneous capture of all the image information (*e.g.*, using one or more fisheye lenses), etc. It will be appreciated that such a panorama image may in some situations be represented in a spherical coordinate system and provide up to 360° coverage around horizontal and/or vertical axes, such that a user viewing a starting panorama image may move the viewing direction within the starting panorama image to different orientations to cause different images (or "views") to be rendered within the starting panorama image (including, if the panorama image is represented in a spherical coordinate system, to convert the image being rendered into a planar coordinate system). Furthermore, acquisition metadata regarding the capture of such panorama images may be obtained and used in various manners, such as data acquired from IMU (inertial measurement unit) sensors or other sensors of a mobile device as it is carried by a user or otherwise moved between acquisition locations.

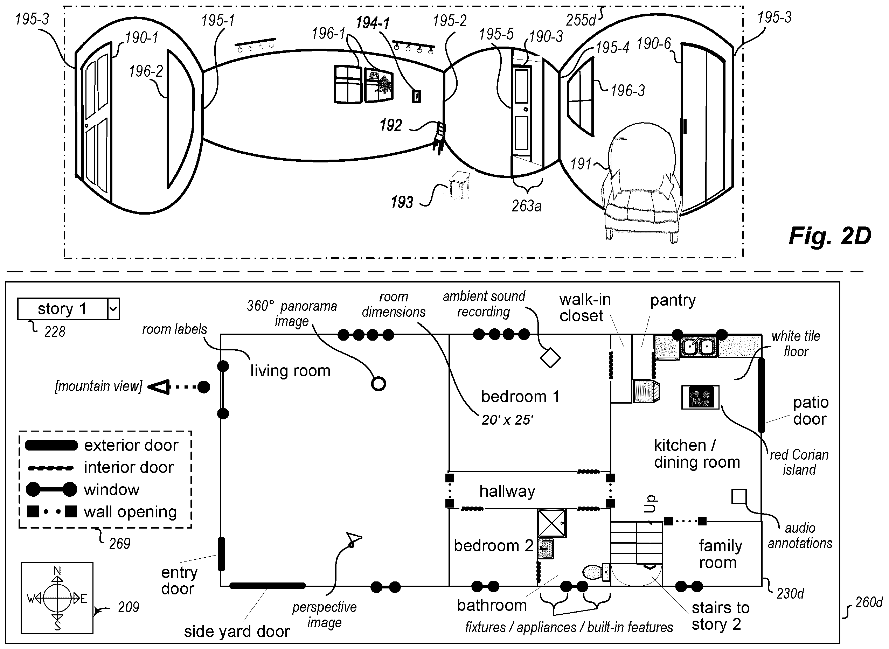

The automated analysis by the BADUM system of building images and/or other environmental information (*e.g.*, audio) acquired within a building may, in at least some embodiments and situations, include identifying structural elements or other objects of various types in rooms of the building or otherwise in areas associated with the building (*e.g.*, external areas, additional accessory buildings or other structures, etc.). Such objects may include, for example, a floor, wall, ceiling, window, doorway, non-doorway wall opening, set of stairs, fixture (*e.g.*, lighting or plumbing), appliance, cabinet, island, fireplace, countertop, other built-in structural element, furniture, etc. The automated analysis by the BADUM system of acquired building images and/or other environmental information may further include determining particular attributes of each of some or all such identified objects, such as, for example, a color, type of material (*e.g.*, surface material), estimated age, etc., as well as additional types of attributes in some embodiments such as directions that building objects face (*e.g*., for windows, doorways, etc.), natural lighting at particular positions (*e.g.*, based on the geographical location and orientation of the building and the position of the sun at a specified time, such as a time-of-day, day-of-month, month-of-year, season-of-year, etc., and optionally corresponding to a particular object), views from particular windows or other locations, etc. Attributes determined for a particular room from one or more images acquired in the room (or otherwise from one or more images acquired at positions with a view of at least some of the room) may include, for example, one or more of the following non-exclusive examples: room types, room dimensions, room shape (*e.g.*, two-dimensional, or '2D', such as relative positions of walls; three-dimensional, or '3D', such as a 3D point cloud and/or planar surfaces of walls and a floor and a ceiling; etc.), types of room usage (*e.g.*, public versus private space) and/or functionality (*e.g*., recreation), locations in a room of windows and doorways and other inter-room openings, types of inter-room connections, dimensions of inter-room connections, etc. In at least some such embodiments, the BADUM system may, for such automated analysis of images and/or of other acquired environmental data, use one or more machine learning models (*e.g*., classification neural network models) that are trained via supervised learning (*e.g.*, using labeled data that identifies images having each of the possible objects and attributes), while in other embodiments such machine learning models may instead be trained in an unsupervised manner (*e.g.*, using unsupervised clustering). Additional details are included below regarding automated analysis of acquired images and/or other environmental data associated with a building to determine attributes of the building and of its rooms, including with respect to the examples of Figures 2D-2N and their associated descriptions.

As noted above, automated operations of a BADUM system may also in at least some embodiments include automatically analyzing a building floor plan to determine attributes of the building, including in at least some situations by using one or more trained machine learning models (*e.g.*, one or more trained neural networks, and whether the same or different from the machine learning models used to analyze images and optionally other acquired environmental data) to determine attributes that reflect characteristics of some or all of the building (*e.g.*, of two or more rooms of the building), such as corresponding to some or all of a layout of some or all rooms of the building (*e.g*., based at least in part on inter-connections between rooms and/or other inter-room adjacencies). Such a floor plan of a building may include a 2D (two-dimensional) representation of various information about the building (*e.g.*, the rooms, doorways between rooms and other inter-room connections, exterior doorways, windows, etc.), and may be further associated with various types of supplemental or otherwise additional information about the building (*e.g*., data for a plurality of other building-related attributes) - such additional building information may, for example, include one or more of the following: a 3D, or three-dimensional, model of the building that includes height information (*e.g*., for building walls and inter-room openings and other vertical areas); a 2.5D, or two-and-a-half dimensional, model of the building that when rendered includes visual representations of walls and/or other vertical surfaces without explicitly modeling measured heights of those walls and/or other vertical surfaces; images and/or other types of data captured in rooms of the building, including panoramic images (*e.g.*, 360° panorama images); etc., as discussed in greater detail below. In some embodiments and situations, the floor plan or associated information may further represent at least some information external to the building (*e.g.*, for some or all of a property on which the building is located), such as exterior areas adjacent to doorways or other wall openings between the building and the exterior, or more generally some or all external areas of a property that includes one or more buildings or other structures (*e.g.*, a house and one or more outbuildings or other accessory structures, such as a garage, shed, pool house, separate guest quarters, mother-in-law unit or other accessory dwelling unit, pool, patio, deck, sidewalk, etc.).

The automated analysis by the BADUM system of a building floor plan may, in at least some embodiments and situations, include determining building attributes that are based on information about a building as a whole, such as objective attributes that can be independently verified and/or replicated (*e.g.*, number of bedrooms, number of bathrooms, connectivity between rooms, etc.), and/or subjective attributes that have associated uncertainty (*e.g.*, whether the building has an open floor plan; a typical/normal versus atypical/odd/unusual floor plan; a standard versus nonstandard floor plan; a floor plan that is accessibility friendly, such as by being accessible with respect to one or more characteristics such as wheelchair or other disability and/or advanced age; etc.). The automated analysis by the BADUM system of a building floor plan may, in at least some embodiments and situations, further include determining building attributes that are based at least in part on information about inter-room adjacencies (*e.g.*, inter-room connections between two or more rooms or other areas), such as based at least in part on a layout of some or all rooms of a building (*e.g.*, all rooms on the same story or that are otherwise part of a grouping of rooms), including some or all such subjective attributes, as well as other types of attributes such as a movement flow pattern of people through rooms. At least some such determined building attributes may be further based on information about a building's location and/or orientation (*e.g*., about views available from windows or other exterior openings of the building, about directions of windows or other structural elements or other objects of the building, about natural lighting information available at specified days and/or seasons and/or times, etc.). In at least some such embodiments, the BADUM system may, for such automated analysis of building floor plans, use one or more machine learning models (*e.g.*, classification neural network models) that are trained via supervised learning (*e.g.*, using labeled data that identifies floor plans or other groups of rooms or other areas having each of the possible characteristics or other attributes), while in other embodiments such machine learning models may instead be trained in an unsupervised manner (*e.g.*, using unsupervised clustering). Additional details are included below regarding automated analysis of a floor plan associated with a building to determine attributes of the building, including with respect to the examples of Figures 2D-2N and their associated descriptions.

As noted above, automated operations of a BADUM system may also in at least some embodiments include automated generation of descriptions about a building based on automatically determined characteristics and other attributes, including, in at least some embodiments and situations, using one or more trained language models to generate a description for each of some or all such determined attributes. The generated descriptions for individual attributes may be further combined in various manners in various embodiments, such as by grouping attributes and their associated descriptions in various manners (*e.g.*, by room or other area; by type of attribute, such as by color and/or surface material; by degree of specificity or generality, such as to group building-wide attributes and include their generated descriptions, followed by generated descriptions for attributes that are grouped by room, followed by generated descriptions for attributes that correspond to individual structural elements and other objects; etc.). Such generation of attribute descriptions may include, for example, using one or more trained language models that take input such as objects and/or other attributes, associated location information (*e.g.*, one or more rooms, one or more stories or other groups of rooms, etc.), timing and/or sequence information (*e.g.*, a series of objects and/or other attributes to be highlighted or otherwise shown in a video), etc., and generate corresponding textual descriptions. Additional details are included below regarding automatically generating descriptions of determined building attributes, including with respect to the examples of Figures 2D-2N and their associated descriptions.

After attributes and/or building descriptions are generated for a building based on analysis of information for a building (*e.g.*, images of, a floor plan for, and optionally other associated information for a building), that generated building information may be used by the BADUM system in various manners, including in some embodiments as part of updating and/or validating the contents of existing building descriptions. Such validating may include, for example, reviewing some or all of the statements or other contents in a group of existing building information to determine if such contents may be confirmed using the generated building information (*e.g*., to confirm factual statements about particular attributes), and if so, the validated content (or all of the existing building information if validated) may in at least some embodiments be marked or otherwise indicated as validated - for contents that are not factually confirmed using the generated building information, the BADUM system may instead, for example, perform operations that include identifying them as incorrect (such as if generated building information indicates other opposite or inconsistent information, and if so, optionally removing them or marking them as such), identifying them as unconfirmed (*e.g.*, inconclusive based on the generated building information, and if so, optionally removing them or marking them as such), referring those contents for further review (*e.g.*, manual review), and/or taking no further automated operation. The BADUM system may in some embodiments perform automated operations to update existing building information, whether instead of or in addition to performing validating, such as to add, to the existing building information, generated building descriptions with data that was not previously present, and/or to replace information in the existing building information contents that is identified as being incorrect. In addition, the BADUM system may in some embodiments generate a new textual building description based on the generated building information, such as if an existing building description is not available to be updated and/or validated, or instead as a supplement to or replacement of such an existing building description. Such existing, validated, updated and/or newly generated building descriptions may have various forms in various embodiments, such as one or more lists of attributes (*e.g.*, key-value pairs of attribute type and value), groups of descriptive textual information (*e.g.*, sentences, paragraphs, phrases, etc.), database entries or other structured data, etc. - as one specific example, some or all of the building description information may be part of listing information for a building (*e.g.*, for a property that is available for sale or rent, such as is included on a Multiple Listing Service, or MLS, or similar forum), or may instead be part of a database of information about multiple buildings (*e.g.*, a property database). In addition, in at least some embodiments and situations, the updated and/or validated and/or newly generated building information may further include data in formats other than numerical or other textual information, such as for the BADUM system to add visual data (*e.g.*, acquired images and/or automatically selected portions of them, such as cropped portions of acquired images) and/or other acquired environmental data (*e.g.*, audio data). Additional details are included below regarding automatically using generated building information to update, validate or otherwise replace or supplement existing building information, including with respect to the examples of Figures 2D-2N and their associated descriptions.

After attributes and/or building descriptions are generated for a building based on analysis of images of and/or a floor plan for and optionally other associated information of a building, that generated building information may also be used by the BADUM system in some embodiments to automatically determine that the building matches one or more specified criteria (*e.g.*, search criteria) in various manners in various embodiments, including to identify that a building is similar to or otherwise matches one or more other buildings based on their corresponding building information. Such criteria may include any one or more attributes or specified combinations of them, and/or more generally may match content of a building textual description, with examples including based on particular objects and/or their attributes, based on adjacency information about which rooms are inter-connected and related inter-room relationship information (*e.g.*, with respect to overall building layout), based on particular rooms or other areas and/or to attributes of those rooms or other areas, etc. Non-exclusive and non-limiting illustrative examples of criteria may include a kitchen with a tile-covered island and dark-colored wood floor and a northward-facing view; a building having a bathroom adjacent to bedroom (*i.e.*, without an intervening hall or other room); a deck adjacent to a family room (optionally with a specified type of connection between them, such as French doors); 2 bedrooms facing south; a master bedroom on a second story with a view of the ocean or more generally of water; any combination of such specified criteria; etc. Additional details are included below regarding using generated information for a building to assist in further identification of the building as matching specified criteria or otherwise being of use, including with respect to the examples of Figures 2D-2N and their associated description.

The described techniques provide various benefits in various embodiments, including to allow information about multi-room buildings and other structures to be identified and used more efficiently and rapidly and in manners not previously available, including to automatically identify buildings that match specified criteria based at least in part on automated analysis of various types of building information (*e.g.*, images, floor plans, etc.) - such criteria may be based, for example, on one or more of the following: attributes of particular objects within the building (*e.g*., in particular rooms or other areas, or more generally attributes of those rooms or other areas), such as determined from analysis of one or more images acquired at the building; similarity to one or more other buildings; adjacency information about which rooms are inter-connected and related inter-room relationship information, such as with respect to overall building layout; similarity to particular building or other area characteristics or other attributes; similarity to subjective attributes regarding a floor plan's characteristics, etc. In addition, such automated techniques allow such identification of matching buildings to be determined by using information acquired from the actual building environment (rather than from plans on how the building should theoretically be constructed), as well as enabling the capture of changes to structural elements and/or visual appearance elements that occur after a building is initially constructed. Such described techniques further provide benefits in allowing improved automated navigation of a building by mobile devices (*e.g.*, semi-autonomous or fully-autonomous vehicles), based at least in part on the identification of buildings that match specified criteria, including to significantly reduce computing power and time used to attempt to otherwise learn a building's layout. In addition, in some embodiments the described techniques may be used to provide an improved GUI in which a user may more accurately and quickly identify one or more buildings matching specified criteria, and obtain information about such one or more buildings (*e.g.*, for use in navigating an interior of the one or more buildings), including in response to search requests, as part of providing personalized information to the user, as part of providing value estimates and/or other information about a building to a user (*e.g.*, after analysis of information about one or more target building floor plans that are similar to one or more initial floor plans or that otherwise match specified criteria), etc. Various other benefits are also provided by the described techniques, some of which are further described elsewhere herein.

In addition, in some embodiments, one or more target buildings are identified that are similar to specified criteria associated with a particular end-user (*e.g.*, based on one or more initial buildings that are selected by the end-user and/or are identified as previously being of interest to the end-user, whether based on explicit and/or implicit activities of the end-user to specify such buildings; based on one or more search criteria specified by the end-user, whether explicitly and/or implicitly; etc.), and are used in further automated activities to personalize interactions with the end-user. Such further automated personalized interactions may be of various types in various embodiments, and in some embodiments may include displaying or otherwise presenting information to the end-user about the target building(s) and/or additional information associated with those buildings. Additional details are included below regarding the use of one or more identified target buildings for further end-user personalization and/or presentation, including with respect to the examples of Figures 2D-2N and their associated descriptions.

As noted above, automated operations of a BADUM system may include identifying building floor plans that have attributes satisfying target criteria and subsequently using the identified floor plans in one or more further automated manners. In at least some embodiments, such an BADUM system may operate in conjunction with one or more separate ICA (Image Capture and Analysis) systems and/or with one or more separate MIGM (Mapping Information and Generation Manager) systems, such as to obtain and use images and floor plans and other associated information for buildings from the ICA and/or MIGM systems, while in other embodiments such an BADUM system may incorporate some or all functionality of such ICA and/or MIGM systems as part of the BADUM system. In yet other embodiments, the BADUM system may operate without using some or all functionality of the ICA and/or MIGM systems, such as if the BADUM system obtains information about building images, floor plans and/or other associated information from other sources (e*.g.,* from manual creation or provision of such building images, floor plans and/or associated information by one or more users).

With respect to functionality of such an ICA system, it may perform automated operations in at least some embodiments to acquire images (*e.g.*, panorama images) at various acquisition locations associated with a building (*e.g.*, in the interior of multiple rooms of the building), and optionally further acquire metadata related to the image acquisition process (*e.g.*, image pose information, such as using compass headings and/or GPS-based locations) and/or to movement of a capture device between acquisition locations - in at least some embodiments, such acquisition and subsequent use of acquired information may occur without having or using information from depth sensors or other distance-measuring devices about distances from images' acquisition locations to walls or other objects in a surrounding building or other structure. For example, in at least some such embodiments, such techniques may include using one or more mobile devices (*e.g.*, a camera having one or more fisheye lenses and mounted on a rotatable tripod or otherwise having an automated rotation mechanism; a camera having one or more fisheye lenses sufficient to capture 360° horizontally without rotation; a smart phone held and moved by a user, such as to rotate the user's body and held smart phone in a 360° circle around a vertical axis; a camera held by or mounted on a user or the user's clothing; a camera mounted on an aerial and/or ground-based drone or other robotic device; etc.) to capture visual data from a sequence of multiple acquisition locations within multiple rooms of a house (or other building). Additional details are included elsewhere herein regarding operations of device(s) implementing an ICA system, such as to perform such automated operations, and in some cases to further interact with one or more ICA system operator user(s) in one or more manners to provide further functionality.

With respect to functionality of such an MIGM system, it may perform automated operations in at least some embodiments to analyze multiple 360° panorama images (and optionally other images) that have been acquired for a building interior (and optionally an exterior of the building), and generate a corresponding floor plan for the building, such as by determining room shapes and locations of passages connecting rooms for some or all of those panorama images, as well as by determining structural wall elements and optionally other objects in some or all rooms of the building in at least some embodiments and situations. The types of structural wall elements corresponding to connecting passages between two or more rooms may include one or more of doorway openings and other inter-room non-doorway wall openings, windows, stairways, non-room hallways, etc., and the automated analysis of the images may identify such elements based at least in part on identifying the outlines of the passages, identifying different content within the passages than outside them (*e.g.*, different colors or shading), etc. The automated operations may further include using the determined information to generate a floor plan for the building and to optionally generate other mapping information for the building, such as by using the inter-room passage information and other information to determine relative positions of the associated room shapes to each other, and to optionally add distance scaling information and/or various other types of information to the generated floor plan. In addition, the MIGM system may in at least some embodiments perform further automated operations to determine and associate additional information with a building floor plan and/or specific rooms or locations within the floor plan, such as to analyze images and/or other environmental information (*e.g.*, audio) captured within the building interior to determine particular objects and attributes (*e.g.*, a color and/or material type and/or other characteristics of particular structural elements or other objects, such as a floor, wall, ceiling, countertop, furniture, fixture, appliance, cabinet, island, fireplace, etc.; the presence and/or absence of particular objects or other elements; etc.), or to otherwise determine relevant attributes (*e.g.*, directions that building objects face, such as windows; views from particular windows or other locations; etc.). Additional details are included below regarding operations of computing device(s) implementing an MIGM system, such as to perform such automated operations and in some cases to further interact with one or more MIGM system operator user(s) in one or more manners to provide further functionality.

For illustrative purposes, some embodiments are described below in which specific types of information are acquired, used and/or presented in specific ways for specific types of structures and by using specific types of devices - however, it will be understood that the described techniques may be used in other manners in other embodiments, and that the invention is thus not limited to the exemplary details provided. As one non-exclusive example, while specific types of data structures (*e.g*., floor plans, virtual tours of inter-linked images, generated building descriptions, etc.) are generated and used in specific manners in some embodiments, it will be appreciated that other types of information to describe buildings may be similarly generated and used in other embodiments, including for buildings (or other structures or layouts) separate from houses, and that buildings identified as matching specified criteria may be used in other manners in other embodiments. In addition, the term "building" refers herein to any partially or fully enclosed structure, typically but not necessarily encompassing one or more rooms that visually or otherwise divide the interior space of the structure - non-limiting examples of such buildings include houses, apartment buildings or individual apartments therein, condominiums, office buildings, commercial buildings or other wholesale and retail structures (*e.g.*, shopping malls, department stores, warehouses, etc.), supplemental structures on a property with another main building (*e.g.*, a detached garage or shed on a property with a house), etc. The term "acquire" or "capture" as used herein with reference to a building interior, acquisition location, or other location (unless context clearly indicates otherwise) may refer to any recording, storage, or logging of media, sensor data, and/or other information related to spatial characteristics and/or visual characteristics and/or otherwise perceivable characteristics of the building interior or subsets thereof, such as by a recording device or by another device that receives information from the recording device. As used herein, the term "panorama image" may refer to a visual representation that is based on, includes or is separable into multiple discrete component images originating from a substantially similar physical location in different directions and that depicts a larger field of view than any of the discrete component images depict individually, including images with a sufficiently wide-angle view from a physical location to include angles beyond that perceivable from a person's gaze in a single direction. The term "sequence" of acquisition locations, as used herein, refers generally to two or more acquisition locations that are each visited at least once in a corresponding order, whether or not other non-acquisition locations are visited between them, and whether or not the visits to the acquisition locations occur during a single continuous period of time or at multiple different times, or by a single user and/or device or by multiple different users and/or devices. In addition, various details are provided in the drawings and text for exemplary purposes, but are not intended to limit the scope of the invention. For example, sizes and relative positions of elements in the drawings are not necessarily drawn to scale, with some details omitted and/or provided with greater prominence (*e.g.*, via size and positioning) to enhance legibility and/or clarity. Furthermore, identical reference numbers may be used in the drawings to identify the same or similar elements or acts.

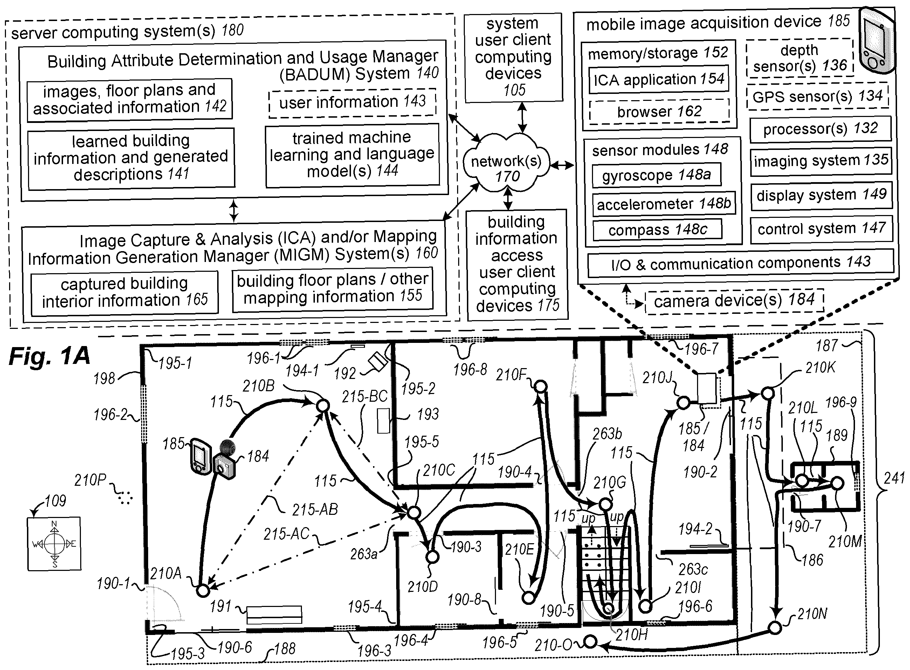

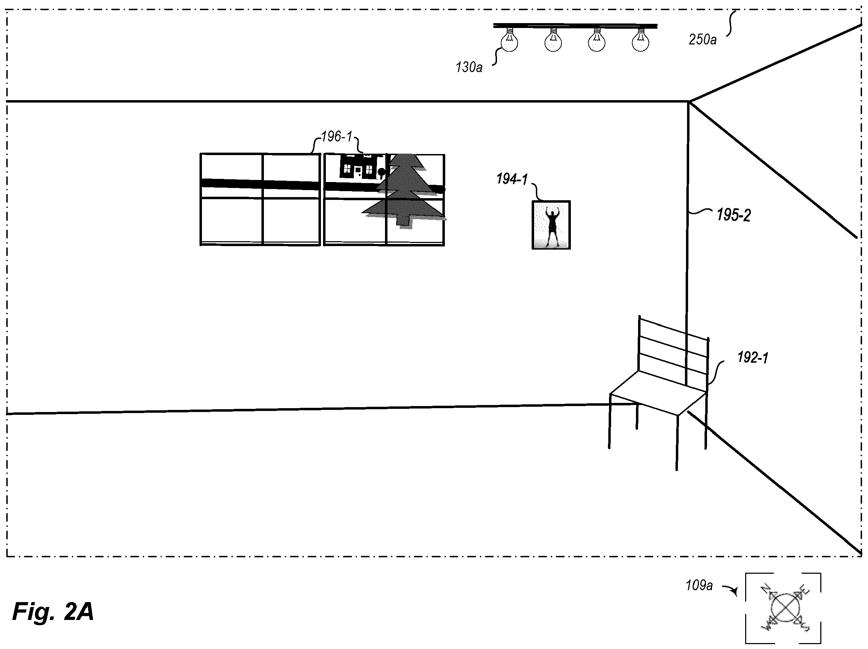

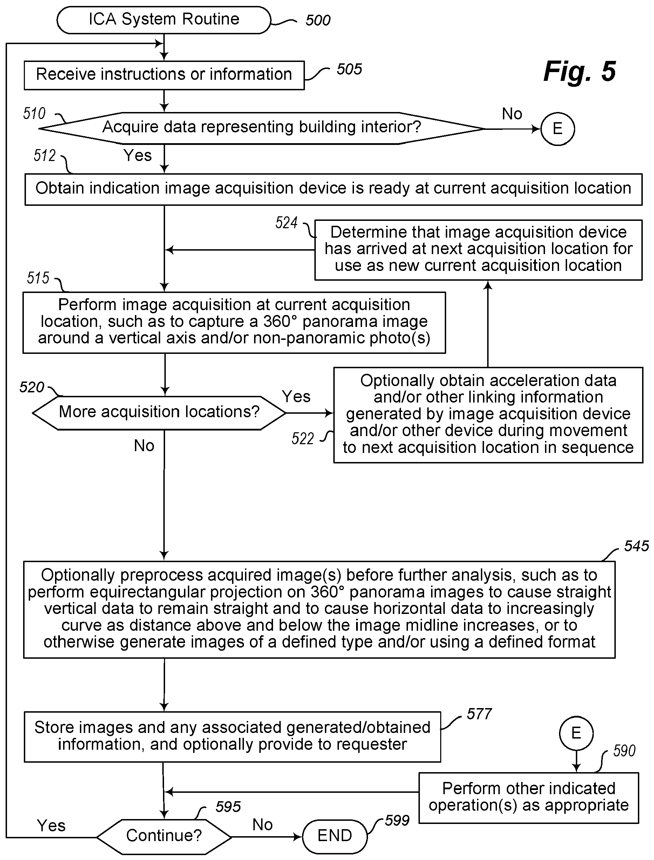

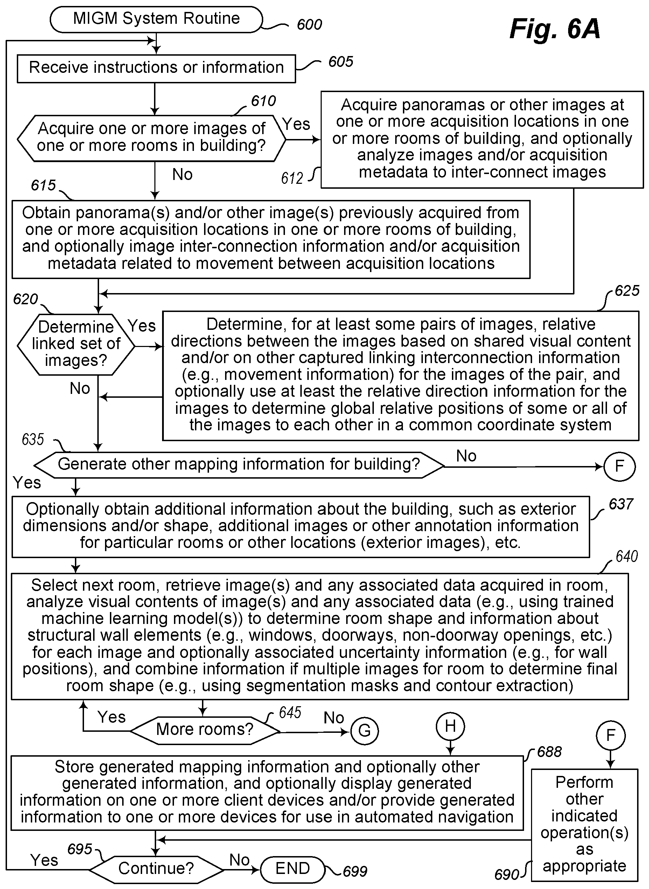

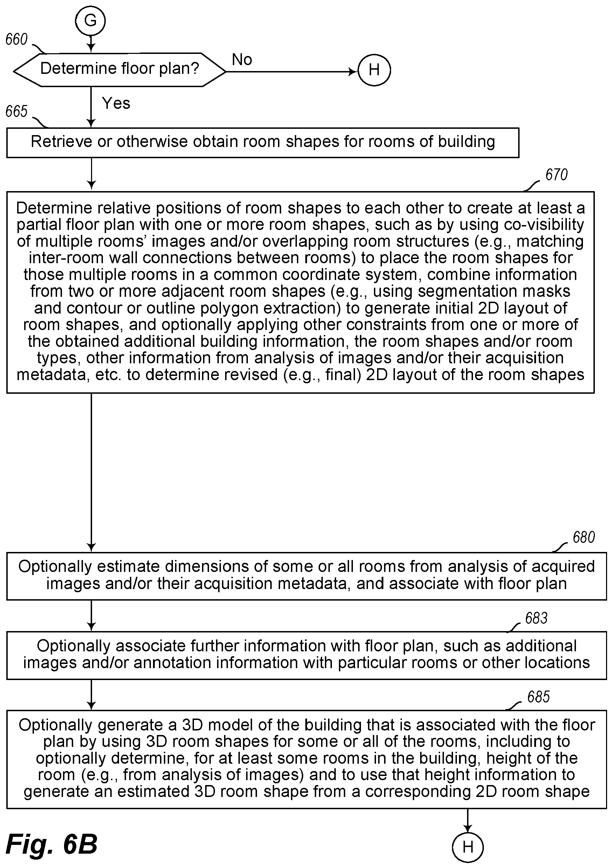

Figure 1A includes an example block diagram of various computing devices and systems that may participate in the described techniques in some embodiments, such as with respect to the illustrated example building 198 (in this example, a house) and the example Building Attribute Determination and Usage Manager ("BADUM") system 140 executing on one or more server computing systems 180 in this example embodiment. In particular, an Interior Capture and Analysis ("ICA") system (*e.g.*, an ICA system 160 executing on the one or more server computing systems 180, such as part of the BADUM system; an ICA system application 154 executing on a mobile image acquisition device 185; etc.) captures information 165 with respect to one or more buildings or other structures (*e.g.*, by capturing one or more 360° panorama images and/or other images for multiple acquisition locations 210 in example house 198), and a MIGM (Mapping Information Generation Manager) system 160 executing on the one or more server computing systems 180 (*e.g.*, as part of the BADUM system) further uses that captured building information and optionally additional supporting information (*e.g.*, supplied by system operator users via computing devices 105 over intervening computer network(s) 170) to generate and provide building floor plans 155 and/or other mapping-related information (not shown) for the building(s) or other structure(s). Additional details related to the automated operation of the ICA and MIGM systems are included elsewhere herein, including with respect to Figures 2A-2D and with respect to Figures 5 and 6A-6B, respectively.

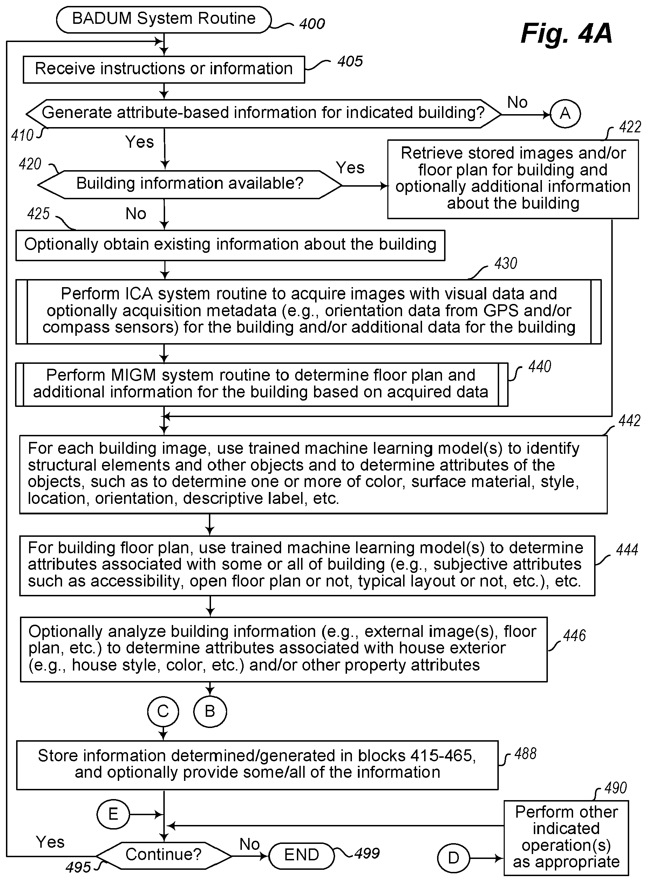

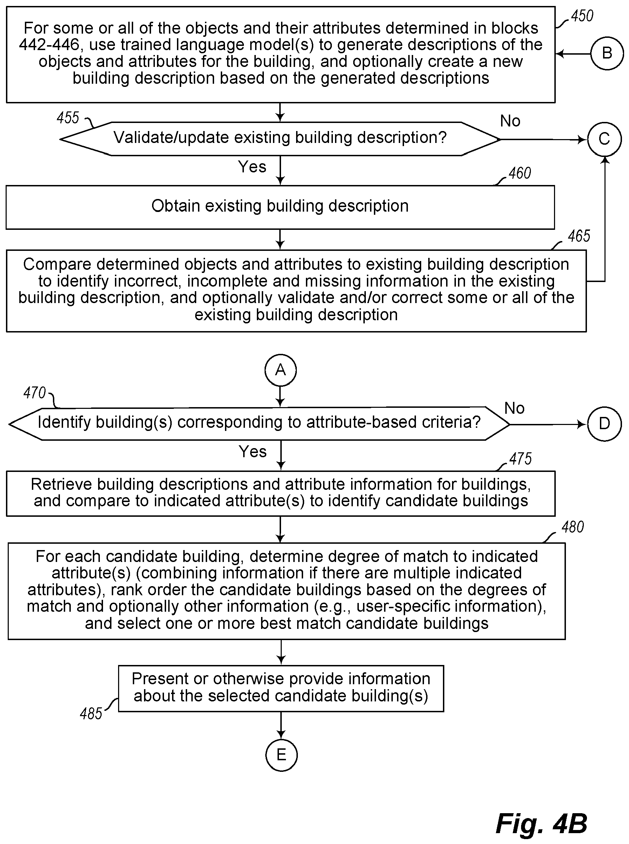

In the illustrated embodiment, the ICA and MIGM systems 160 are operating as part of the BADUM system 140 that analyzes building information 142 (*e.g*., images 165 acquired by the ICA system, floor plans 155 generated by the MIGM system, etc.) and generates and uses corresponding building information 141 (e*.g.*, attributes, textual descriptions, etc.), optionally using supporting information supplied by system operator users via computing devices 105 over intervening computer network(s) 170, and in some embodiments and situations by using one or more trained machine learning and/or language models 144 as part of the analysis of the building information 142 and/or generation of the descriptions - in other embodiments, the building information 142 that is analyzed by the BADUM system may be obtained in manners other than via ICA and/or MIGM systems (*e.g*., if such ICA and/or MIGM systems are not part of the BADUM system), such as to receive building images and/or floor plans from other sources. The BADUM system may further use such generated building information in one or more further automated manners, including in some embodiments as part of identifying buildings that match each other or other indicated criteria - such criteria may in some embodiments and situations be supplied by or otherwise associated with particular users (*e.g.*, attributes specified by users, floor plans or other building information indicated by those users, floor plans or other building information previously identified as being of interest to the users, etc.), and corresponding information 143 about various users may further optionally be stored and used in the identifying of the buildings that satisfy such criteria and the subsequent use of the identified buildings (*e.g*., use of the buildings' floor plans) in one or more further automated manners. In addition, in at least some embodiments and situations, one or more users of client computing devices 105 may further interact over the network(s) 170 with the BADUM system 140, such as to assist with some of the automated operations of the BADUM system for generating building information and/or identifying buildings satisfying criteria and/or subsequent use of the identified floor plans in one or more further automated manners. Additional details related to the automated operations of the BADUM system are included elsewhere herein, including with respect to Figures 2D-2N and Figures 4A-4B.

While the ICA and MIGM systems 160 are illustrated in this example embodiment as executing on the same server computing system(s) 180 as the BADUM system (*e.g*., with all systems being operated by a single entity or otherwise being executed in coordination with each other, such as with some or all functionality of all the systems integrated together), in other embodiments the ICA system 160 and/or MIGM system 160 and/or BADUM system 140 may operate on one or more other systems separate from the system(s) 180 (*e.g.*, on mobile device 185; one or more other computing systems, not shown; etc.), whether instead of or in addition to the copies of those systems executing on the system(s) 180 (*e.g.*, to have a copy of the MIGM system 160 executing on the device 185 to incrementally generate at least partial building floor plans as building images are acquired by the ICA system 160 executing on the device 185 and/or by that copy of the MIGM system, while another copy of the MIGM system optionally executes on one or more server computing systems to generate a final complete building floor plan after all images are acquired), and in yet other embodiments the BADUM may instead operate without an ICA system and/or MIGM system and instead obtain panorama images (or other images) and/or building floor plans from one or more external sources.

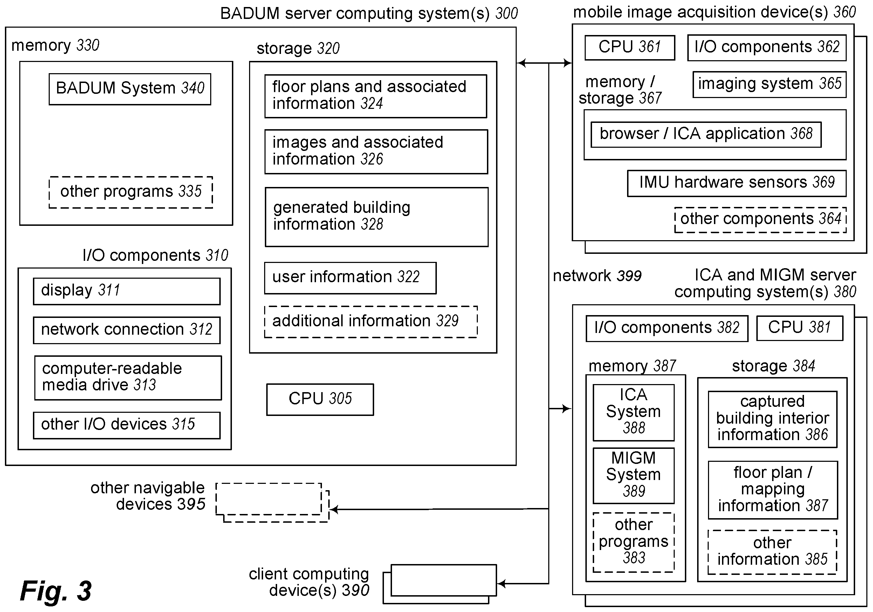

Various components of the mobile computing device 185 are also illustrated in Figure 1A, including one or more hardware processors 132 (*e.g.*, CPUs, GPUs, etc.) that execute software (*e.g.*, ICA application 154, optional browser 162, etc.) using executable instructions stored and/or loaded on one or more memory/storage components 152 of the device 185, and optionally one or more imaging systems 135 of one or more types to acquire visual data of one or more panorama images 165 and/or other images (not shown, such as rectilinear perspective images) - some or all such images 165 may in some embodiments be supplied by one or more separate associated camera devices 184 (*e.g.*, via a wired/cabled connection, via Bluetooth or other inter-device wireless communications, etc.), whether in addition to or instead of images captured by the mobile device 185. The illustrated embodiment of mobile device 185 further includes one or more sensor modules 148 that include a gyroscope 148a, accelerometer 148b and compass 148c in this example (e.g., as part of one or more IMU units, not shown separately, on the mobile device), one or more control systems 147 managing I/O (input/output) and/or communications and/or networking for the device 185 (*e.g.,* to receive instructions from and present information to the user) such as for other device I/O and communication components 143 (*e.g.*, network interfaces or other connections, keyboards, mice or other pointing devices, microphones, speakers, GPS receivers, etc.), a display system 149 (*e.g.*, with a touch-sensitive screen), optionally one or more depth-sensing sensors or other distance-measuring components 136 of one or more types, optionally a GPS (or Global Positioning System) sensor 134 or other position determination sensor (not shown in this example), optionally other components (*e.g.*, one or more lighting components), etc. Other computing devices/systems 105, 175 and 180 and/or camera devices 184 may include various hardware components and stored information in a manner analogous to mobile device 185, which are not shown in this example for the sake of brevity, and as discussed in greater detail below with respect to Figure 3.

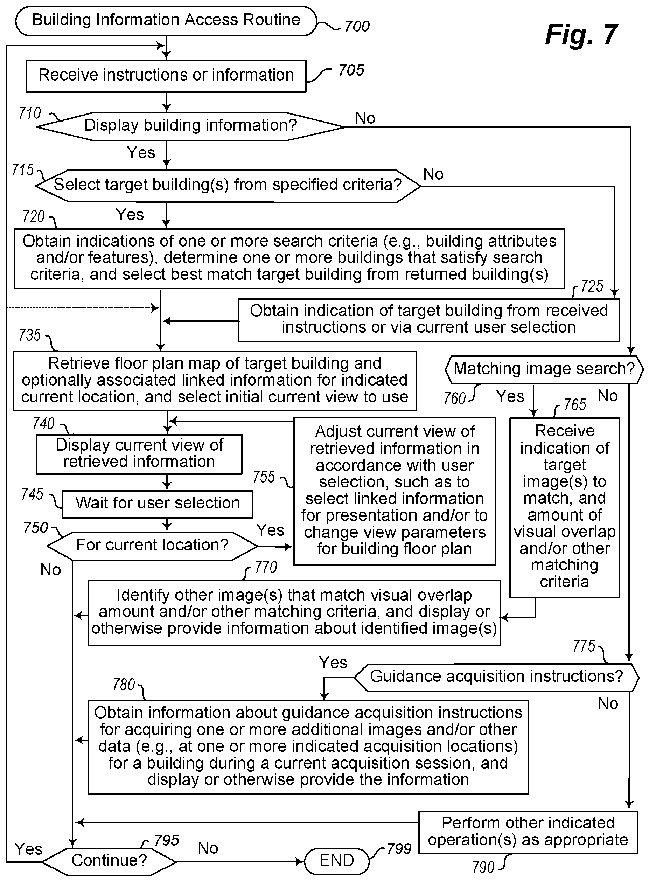

One or more users (*e.g.*, end users, not shown) of one or more client computing devices 175 may further interact over one or more computer networks 170 with the BADUM system 140 (and optionally the ICA system 160 and/or MIGM system 160), such as to participate in identifying buildings having attributes satisfying target criteria and in subsequently using information about the identified buildings in one or more further automated manners - such client computing devices may each execute a building information access system (not shown) that is used by the users in the interactions, as discussed in greater detail elsewhere herein, including with respect to Figure 7. Such interactions by the user(s) may include, for example, specifying criteria to use in searching for corresponding buildings or otherwise providing information about criteria of interest to the users, or obtaining and optionally requesting information for one or more indicated buildings and interacting with corresponding provided building information (*e.g.*, to change between a floor plan view and a view of a particular image at an acquisition location within or near the floor plan; to change the horizontal and/or vertical viewing direction from which a corresponding view of a panorama image is displayed, such as to determine a portion of a panorama image to which a current user viewing direction is directed; to view generated textual building information or other generated building information; etc.). In addition, a floor plan (or portion of it) may be linked to or otherwise associated with one or more other types of information, including for a floor plan of a multi-story or otherwise multi-level building to have multiple associated sub-floor plans for different stories or levels that are interlinked (e.g., via connecting stairway passages), for a two-dimensional ("2D") floor plan of a building to be linked to or otherwise associated with a three-dimensional ("3D") rendering of the building, etc. Also, while not illustrated in Figure 1A, in some embodiments the client computing devices 175 (or other devices, not shown) may receive and use information about buildings (*e.g*., identified floor plans and/or other mapping-related information) in additional manners, such as to control or assist automated navigation activities by those devices (*e.g*., by autonomous vehicles or other devices), whether instead of or in addition to display of the identified information.

In the depicted computing environment of Figure 1A, the network 170 may be one or more publicly accessible linked networks, possibly operated by various distinct parties, such as the Internet. In other implementations, the network 170 may have other forms. For example, the network 170 may instead be a private network, such as a corporate or university network that is wholly or partially inaccessible to non-privileged users. In still other implementations, the network 170 may include both private and public networks, with one or more of the private networks having access to and/or from one or more of the public networks. Furthermore, the network 170 may include various types of wired and/or wireless networks in various situations. In addition, the client computing devices 175 and server computing systems 180 may include various hardware components and stored information, as discussed in greater detail below with respect to Figure 3.

In the example of Figure 1A, the ICA system may perform automated operations involved in generating multiple 360° panorama images at multiple associated acquisition locations (*e.g.*, in multiple rooms or other locations within a building or other structure and optionally around some or all of the exterior of the building or other structure), such as using visual data acquired via the mobile device(s) 185 and/or associated camera devices 184, and for use in generating and providing a representation of an interior of the building or other structure. For example, in at least some such embodiments, such techniques may include using one or more mobile devices (*e.g.*, a camera having one or more fisheye lenses and mounted on a rotatable tripod or otherwise having an automated rotation mechanism, a camera having sufficient fisheye lenses to capture 360° horizontally without rotation, a smart phone held and moved by a user, a camera held by or mounted on a user or the user's clothing, etc.) to capture data from a sequence of multiple acquisition locations within multiple rooms of a house (or other building), and to optionally further capture data involved in movement of the acquisition device (*e.g.*, movement at an acquisition location, such as rotation; movement between some or all of the acquisition locations, such as for use in linking the multiple acquisition locations together; etc.), in at least some cases without having distances between the acquisition locations being measured or having other measured depth information to objects in an environment around the acquisition locations (*e.g.*, without using any depth-sensing sensors). After an acquisition location's information is captured, the techniques may include producing a 360° panorama image from that acquisition location with 360° of horizontal information around a vertical axis (*e.g.*, a 360° panorama image that shows the surrounding room in an equirectangular format), and then providing the panorama images for subsequent use by the MIGM and/or BADUM systems.

In addition, while not illustrated in Figure 1A, a floor plan (or portion of it) may be linked to or otherwise associated with one or more additional types of information, such as one or more associated and linked images or other associated and linked information, including for a two-dimensional ("2D") floor plan of a building to be linked to or otherwise associated with a separate 2.5D model floor plan rendering of the building and/or a 3D model floor plan rendering of the building, etc., and including for a floor plan of a multi-story or otherwise multi-level building to have multiple associated sub-floor plans for different stories or levels that are interlinked (*e.g.*, via connecting stairway passages) or are part of a common 2.5D and/or 3D model. Accordingly, non-exclusive examples of an end user's interactions with a displayed or otherwise generated 2D floor plan of a building may include one or more of the following: to change between a floor plan view and a view of a particular image at an acquisition location within or near the floor plan; to change between a 2D floor plan view and a 2.5D or 3D model view that optionally includes images texture-mapped to walls of the displayed model; to change the horizontal and/or vertical viewing direction from which a corresponding subset view of (or portal into) a panorama image is displayed, such as to determine a portion of a panorama image in a 3D coordinate system to which a current user viewing direction is directed, and to render a corresponding planar image that illustrates that portion of the panorama image without the curvature or other distortions present in the original panorama image; etc. In addition, while not illustrated in Figure 1A, in some embodiments the client computing devices 175 (or other devices, not shown) may receive and use generated floor plans and/or other generated mapping-related information in additional manners, such as to control or assist automated navigation activities by those devices (*e.g.*, by autonomous vehicles or other devices), whether instead of or in addition to display of the generated information.

Figure 1A further depicts an exemplary building interior environment in which 360° panorama images and/or other images are acquired, such as by the ICA system and for use by the MIGM system (*e.g.*, under control of the BADUM system) to generate and provide one or more corresponding building floor plans (e.g., multiple incremental partial building floor plans) and/or by the BADUM system to further use such building information as part of automated building information generation operations. In particular, Figure 1A illustrates one story of a multi-story house (or other building) 198 with an interior that was captured at least in part via multiple panorama images, such as by a mobile image acquisition device 185 with image acquisition capabilities and/or one or more associated camera devices 184 as they are moved through the building interior to a sequence of multiple acquisition locations 210 (*e.g.*, starting at acquisition location 210A, moving to acquisition location 210B along travel path 115, etc., and ending at acquisition location 210-0 or 210P outside of the building). An embodiment of the ICA system may automatically perform or assist in the capturing of the data representing the building interior (as well as to further analyze the captured data to generate 360° panorama images to provide a visual representation of the building interior), and an embodiment of the MIGM system may analyze the visual data of the acquired images to generate one or more building floor plans for the house 198 (*e.g.*, multiple incremental building floor plans). While such a mobile image acquisition device may include various hardware components, such as a camera, one or more sensors (*e.g.*, a gyroscope, an accelerometer, a compass, etc., such as part of one or more IMUs, or inertial measurement units, of the mobile device; an altimeter; light detector; etc.), a GPS receiver, one or more hardware processors, memory, a display, a microphone, etc., the mobile device may not in at least some embodiments have access to or use equipment to measure the depth of objects in the building relative to a location of the mobile device, such that relationships between different panorama images and their acquisition locations in such embodiments may be determined in part or in whole based on elements in different images but without using any data from any such depth sensors, while in other embodiments such depth data may be used. In addition, while directional indicator 109 is provided in Figure 1A for reference of the reader relative to the example house 198, the mobile device and/or ICA system may not use such absolute directional information and/or absolute locations in at least some embodiments, such as to instead determine relative directions and distances between acquisition locations 210 without regard to actual geographical positions or directions in such embodiments, while in other embodiments such absolute directional information and/or absolute locations may be obtained and used.

In operation, the mobile device 185 and/or camera device(s) 184 arrive at a first acquisition location 210A within a first room of the building interior (in this example, in a living room accessible via an external door 190-1), and captures or acquires a view of a portion of the building interior that is visible from that acquisition location 210A (*e.g.*, some or all of the first room, and optionally small portions of one or more other adjacent or nearby rooms, such as through doorway wall openings, non-doorway wall openings, hallways, stairways or other connecting passages from the first room). The view capture may be performed in various manners as discussed herein, and may include a number of structural elements or other objects that may be visible in images captured from the acquisition location - in the example of Figure 1A, such objects within the building 198 include the walls, floors, ceilings, doorways 190 (including 190-1 through 190-6, such as with swinging and/or sliding doors), windows 196 (including 196-1 through 196-8), borders between walls and other walls/ceilings/floors such as for inter-wall corners or edges 195 (including corner 195-1 in the northwest corner of the building 198, corner 195-2 in the northeast corner of the first room, corner 195-3 in the southwest corner of the first room, corner 195-4 in the southeast corner of the first room, corner 195-5 at the northern edge of the inter-room passage between the first room and a hallway, etc.), furniture 191-193 (*e.g.*, a couch 191; chair 192; table 193; etc.), pictures or paintings or televisions or other hanging objects 194 (such as 194-1 and 194-2) hung on walls, light fixtures (not shown in Figure 1A), various built-in appliances or other fixtures or other structural elements (not shown in Figure 1A), etc. The user may also optionally provide a textual or auditory identifier to be associated with an acquisition location and/or a surrounding room, such as "living room" for one of acquisition locations 210A or 210B or for the room including acquisition locations 210A and/or 210B, while in other embodiments the ICA and/or MIGM system may automatically generate such identifiers (e.g., by automatically analyzing images and/or video and/or other recorded information for a building to perform a corresponding automated determination, such as by using machine learning; based at least in part on input from ICA and/or MIGM system operator users; etc.) or the identifiers may not be used.

After the first acquisition location 210A has been captured, the mobile device 185 and/or camera device(s) 184 may be moved or move under their own power to a next acquisition location (such as acquisition location 210B), optionally recording images and/or video and/or other data from the hardware components (e.g., from one or more IMUs, from the camera, etc.) during movement between the acquisition locations. At the next acquisition location, the mobile 185 and/or camera device(s) 184 may similarly capture a 360° panorama image and/or other type of image from that acquisition location. This process may repeat for some or all rooms of the building and in some cases external to the building, as illustrated for additional acquisition locations 210C-210P in this example, with the images from acquisition locations 210A to 210-0 being captured in a single image acquisition session in this example (e.g., in a substantially continuous manner, such as within a total of 5 minutes or 15 minutes), and with the image from acquisition location 210P optionally being acquired at a different time (e.g., from a street adjacent to the building or front yard of the building). In this example, multiple of the acquisition locations 210K-210P are external to but associated with the building 198 on the surrounding property 241, including acquisition locations 210L and 210M in one or more additional structures on the same property (e.g., an ADU, or accessory dwelling unit; a garage; a shed; etc.), acquisition location 210K on an external deck or patio 186, and acquisition locations 210N-210P at multiple yard locations on the property 241 (*e.g.*, backyard 187, side yard 188, front yard including acquisition location 210P, etc.). The acquired images for each acquisition location may be further analyzed, including in some embodiments to render or otherwise place each panorama image in an equirectangular format, whether at the time of image acquisition or later, as well as further analyzed by the MIGM and/or BADUM systems in the manners described herein.

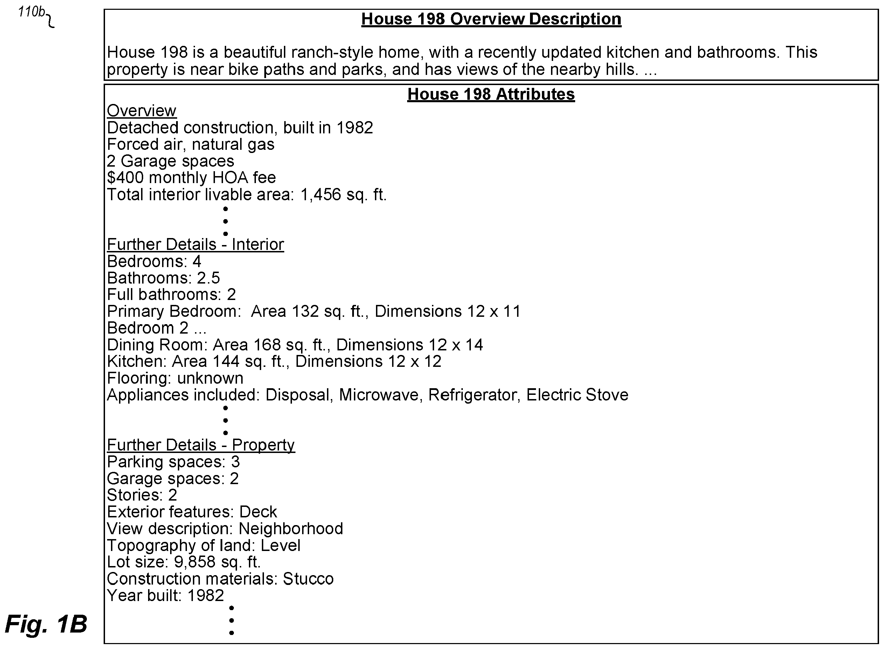

Figure 1B illustrates examples of types of building description information 110b that may be available in some embodiments, such as existing building information that is subsequently validated, updated and/or replaced by building information generated by the BADUM system. In the example of Figure 1B, the building description information 110b includes an overview textual description, and well as various attribute data. In this example, the attribute data is grouped into sections (*e.g.*, overview attributes, further interior detail attributes, further property detail attributes, etc.), but in other embodiments the attribute data may not be grouped or may be grouped in other manners, or more generally the building description information may not be separated into a list of attributes and a separate textual overview description. In this example, the separate textual overview description emphasizes characteristics that may be of interest to viewers of the description information, such as a house style type, information of interest about rooms and other building characteristics (*e.g.*, have been recently updated or have other characteristics of interest), information of interest about the property and surrounding neighborhood or other environment, etc. In addition, in this example, the attribute data includes objective attributes of a variety of types about rooms and the building and limited information about appliances, but generally lacks details of various types, such as about subjective attributes, about inter-room connectivity and other adjacency, about other particular structural elements or objects and about attributes of such objects, etc.

Various details are provided with respect to Figures 1A and 1B, but it will be appreciated that the provided details are non-exclusive examples included for illustrative purposes, and other embodiments may be performed in other manners without some or all such details.

Figures 2A-2N illustrate examples of automatically identifying building floor plans that have attributes satisfying target criteria and subsequently using the identified floor plans in one or more automated manners, such as for the building 198.

In particular, Figure 2A illustrates an example image 250a, such as a non-panorama perspective image taken in a northeasterly direction from acquisition location 210B in the living room of house 198 of Figure 1A (or a northeasterly facing subset view of a 360° panorama image taken from that acquisition location and formatted in a rectilinear manner) - the directional indicator 109a is further displayed in this example to illustrate the northeasterly direction in which the image is taken. In the illustrated example, the displayed image includes built-in elements (e.g., light fixture 130a, two windows 196-1, etc.), furniture (e.g., chair 192-1), and a picture 194-1 hanging on the north wall of the living room. No inter-room passages into or out of the living room (*e.g.*, doorways or other wall openings) are visible in this image. However, multiple room borders are visible in the image 250a, including horizontal wall-ceiling and wall-floor borders between a visible portion of the north wall of the living room and the living room's ceiling and floor, horizontal wall-ceiling and wall-floor borders between a visible portion of the east wall of the living room and the living room's ceiling and floor, and the inter-wall vertical border 195-2 between the north and east walls.

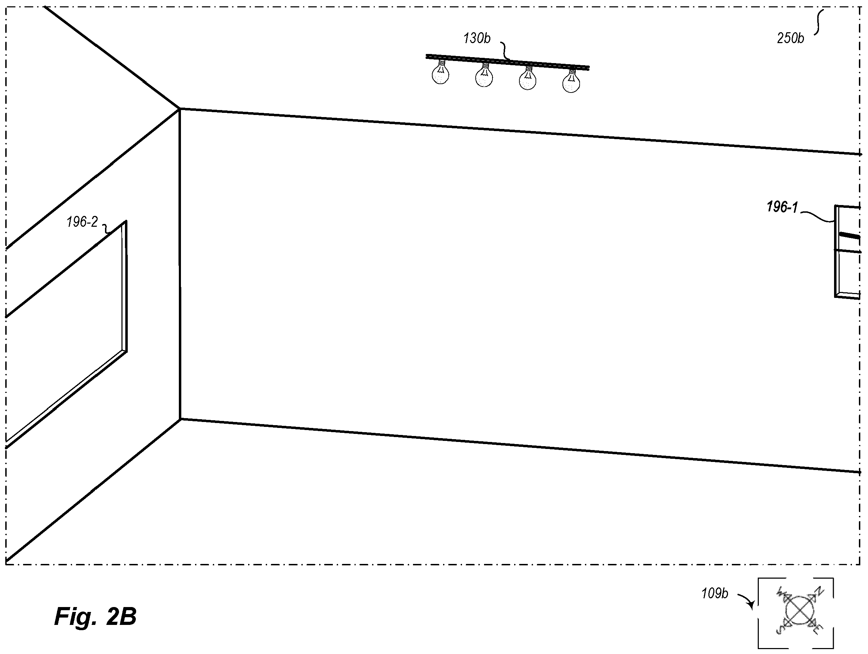

Figure 2B continues the example of Figure 2A, and illustrates an additional perspective image 250b taken in a northwesterly direction from acquisition location 210B in the living room of house 198 of Figure 1A - the directional indicator 109b is further displayed to illustrate the northwesterly direction in which the image is taken. In this example image, a small portion of one of the windows 196-1 continues to be visible, along with a portion of window 196-2 and a new lighting fixture 130b. In addition, horizontal and vertical room borders are visible in image 250b in a manner similar to that of Figure 2A.

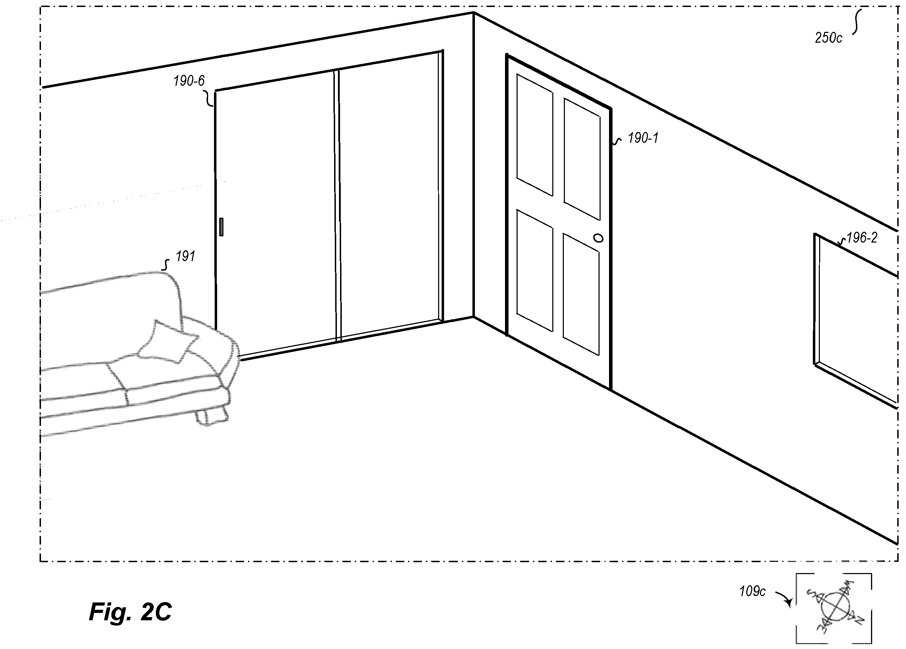

Figure 2C continues the examples of Figures 2A-2B, and illustrates a third perspective image 250c taken in a southwesterly direction in the living room of house 198 of Figure 1A, such as from acquisition location 210B - the directional indicator 109c is further displayed to illustrate the southwesterly direction in which the image is taken. In this example image, a portion of window 196-2 continues to be visible, as is a couch 191 and visual horizontal and vertical room borders in a manner similar to that of Figures 2A and 2B. This example image further illustrates two inter-room passages for the living room, which in this example include a doorway 190-1 with a swinging door to enter and leave the living room (which Figure 1A identifies as a door to the exterior of the house, such as the front yard), and a doorway 190-6 with a sliding door to move between the living room and side yard 188 - as is shown in the information in Figure 1A, an additional non-doorway wall opening 263a exists in the east wall of the living room to move between the living room and hallway, but is not visible in the images 250a-250c. It will be appreciated that a variety of other perspective images may be taken from acquisition location 210B and/or other acquisition locations and displayed in a similar manner.

Figure 2D continues the examples of Figures 2A-2C, and illustrates a 360° panorama image 255d (*e.g.*, taken from acquisition location 210B), which displays the entire living room in an equirectangular format - since the panorama image does not have a direction in the same manner as the perspective images of Figures 2A-2C, the directional indicator 109 is not displayed in Figure 2D, although pose information for the panorama image may include one or more associated directions (*e.g.*, a starting and/or ending direction for the panorama image, such as if acquired via rotation). A portion of the visual data of panorama image 255d corresponds to the first perspective image 250a (shown in approximately the center portion of the image 250d), while the left portion of the image 255d and the far-right portion of the image 255d contain visual data corresponding to those of the perspective images 250b and 250c. This example panorama image 255d includes windows 196-1, 196-2 and 196-3, furniture 191-193, doorways 190-1 and 190-6, and non-doorway wall opening 263a to the hallway room (with the opening showing part of a doorway 190-3 visible in the adjacent hallway). Image 255d further illustrates a variety of room borders in a manner similar to that of the perspective images, but with the horizontal borders being displayed in an increasingly curved manner the farther they are from a horizontal midline of the image - the visible borders include vertical inter-wall borders 195-1 through 195-4, vertical border 195-5 at the north/left side of the hallway opening, vertical borders at the south/right side of the hallway opening, and horizontal borders between the walls and the floor and between the walls and the ceiling.

Figure 2D further illustrates information 260d that includes one example 230d of part of a 2D floor plan for the house 198, such as may be presented to an end-user in a GUI 260d, with the living room being the most westward room of the house (as reflected by directional indicator 209) - it will be appreciated that a 3D or 2.5D floor plan with rendered wall height information may be similarly generated and displayed in some embodiments, whether in addition to or instead of such a 2D floor plan. Various types of information are illustrated on the 2D floor plan 230d in this example. For example, such types of information may include one or more of the following: room labels added to some or all rooms (e.g., "living room" for the living room); room dimensions added for some or all rooms; visual indications of objects such as installed fixtures or appliances (e.g., kitchen appliances, bathroom items, etc.) or other built-in elements (*e.g*., a kitchen island) added for some or all rooms; visual indications added for some or all rooms of positions of additional types of associated and linked information (e.g., of other panorama images and/or perspective images that an end-user may select for further display, of audio annotations and/or sound recordings that an end-user may select for further presentation, etc.); visual indications added for some or all rooms of structural elements such as doors and windows; visual indications of visual appearance information (*e.g.*, color and/or material type and/or texture for installed items such as floor coverings or wall coverings or surface coverings); visual indications of views from particular windows or other building locations and/or of other information external to the building (e.g., a type of an external space; items present in an external space; other associated buildings or structures, such as sheds, garages, pools, decks, patios, walkways, gardens, etc.); a key or legend 269 identifying visual indicators used for one or more types of information; etc. When displayed as part of a GUI such as 260d, some or all such illustrated information may be user-selectable controls (or be associated with such controls) that allows an end-user to select and display some or all of the associated information (*e.g.*, to select the 360° panorama image indicator for acquisition location 210B to view some or all of that panorama image (e.g., in a manner similar to that of Figures 2A-2D). In addition, in this example a user-selectable control 228 is added to indicate a current story that is displayed for the floor plan, and to allow the end-user to select a different story to be displayed - in some embodiments, a change in stories or other levels may also be made directly from the floor plan, such as via selection of a corresponding connecting passage in the illustrated floor plan (e.g., the stairs to story 2). It will be appreciated that a variety of other types of information may be added in some embodiments, that some of the illustrated types of information may not be provided in some embodiments, and that visual indications of and user selections of linked and associated information may be displayed and selected in other manners in other embodiments.

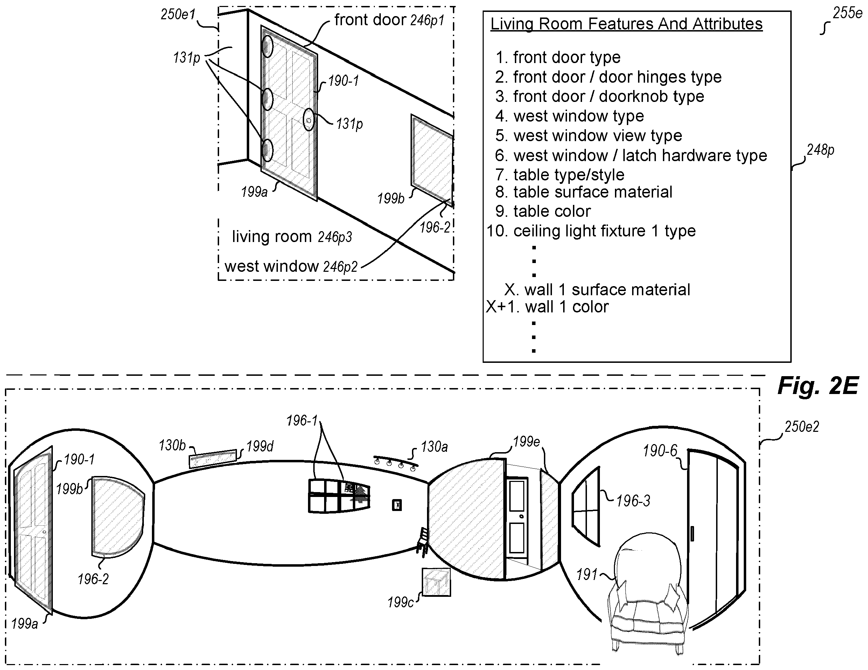

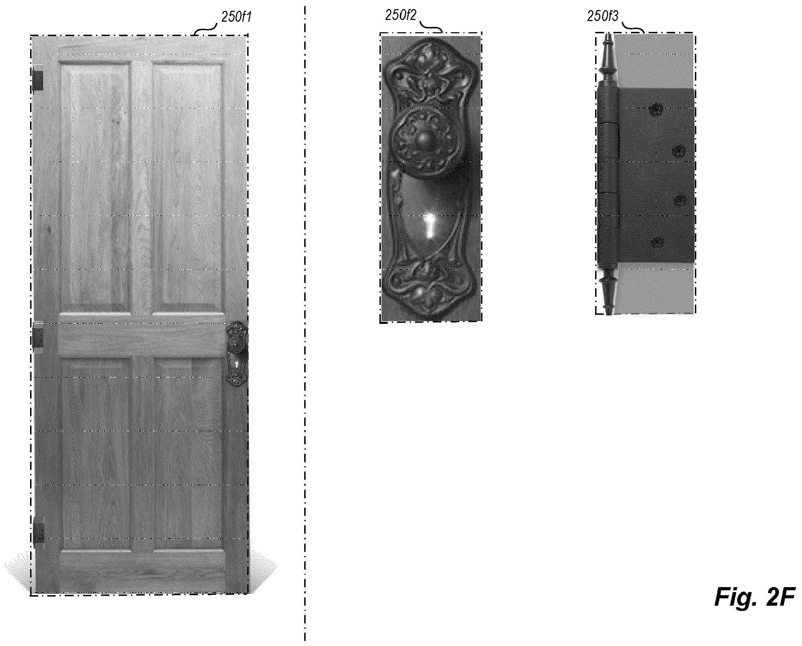

Figures 2E and 2F continue the examples of Figures 2A-2D, with Figure 2E illustrating information 255e that includes an image 250e1 of the southwest portion of the living room (in a manner similar to a portion of image 250c of Figure 2C), and with additional information overlaid on the image to illustrate information determined about objects and target attributes in that portion of the room, along with information about locations of those objects. In particular, in this example, the west window (element 196-2 of image 250c) has been identified as an object in the room, with the corresponding 'west window' label 246p2 having been determined for the object (whether automatically or based at least in part on information provided by one or more associated users), and an automatically determined location 199b of the object in the image being shown (which in this example is a bounding box for the object). The information 255e further illustrates a list 248p of objects and target attributes of interest identified based at least in part on the visual data of image 250e1, which indicates that attributes of interest for the west window include its type (e.g., a picture window), type of latch hardware, information about a view through the window, and optionally various other attributes (*e.g.*, size, orientation/direction it faces, etc.). The image 250e1 further indicates that the doorway 190-1 has been identified as an object in the room, with a 'front door' label 246p1 (whether determined automatically or based at least in part on information provided by one or more associated users) and automatically determined bounding box location 199a being shown. In addition, the information 248p indicates that determined attributes of the door include a type of the door and information about door's doorknob and door hinges, which are further visually indicated 131p on the image 250p. Figure 2F illustrates additional visual data that may be extracted from images 250e1 and/or 250e2 of Figure 2E as part of determining objects and other attributes for the room, and in particular includes close-up example images 250f1, 250f2 and 250f3 corresponding to the front door for doorway 190-1 and its hardware 131p, such as for use in determining corresponding attributes for the front door. Other objects may similarly be identified, such as one or more ceiling light fixtures, furniture, walls and other surfaces, etc. (*e.g.*, based at least in part on a list of defined types of objects that are expected or typical for rooms of type 'living room'). In addition, a 'living room' label 246p3 for the room is also determined (whether automatically or based at least in part on information provided by one or more associated users) and shown. Figure 2E further provides an alternative or additional image 250e2, which in this example is a panorama image with 360° of visual coverage of the living room (in a manner similar to image 255d of Figure 2D) - such a panorama image may be used instead of or in addition to a perspective image such as image 250e1 for determining objects and other attributes and additional related information (*e.g.*, locations, labels, etc.), as well as for assessing an overall layout of items in the room and/or expected traffic flow for the room, with the example panorama image 250e2 similarly showing the location bounding boxes 199a and 199b for the front door and west window objects, as well as an additional location bounding boxes 199c for table 193, 199d for ceiling light 130b, and 199e for the east wall - it will be appreciated that a variety of other types of objects and/or target attributes may be determined in other embodiments, including for other walls and surfaces (*e.g*., the ceiling and floor) and other structural elements (*e.g*., windows 196-1 and 193, doorway 190-6, non-doorway wall opening 263a, etc.), other furniture (*e.g.*, couch 191, chair 192, etc.), etc.

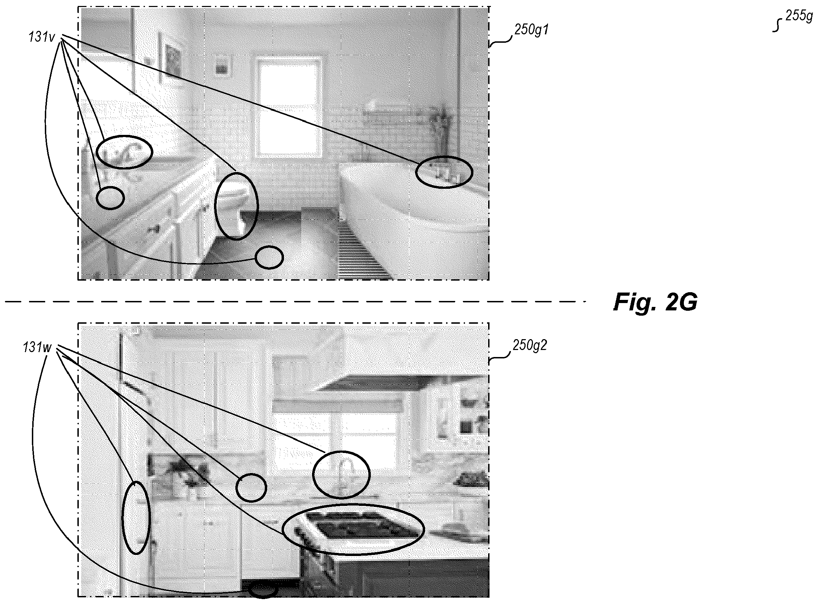

Figure 2G continue the examples of Figures 2A-2F, and provide examples of additional data that may be determined about objects and other attributes for other rooms of the building based at least in part on analysis of one or more initial room-level images of those other rooms. In particular, Figure 2G illustrates information 255g that includes an image 250g1, such as for bathroom 1. In a manner analogous to that of the images of Figure 2E, image 250g1 includes indications 131v of objects in the bathroom that are identified and for which corresponding attribute data is determined, which in this example includes a tile floor, a sink countertop, a sink faucet and/or other sink hardware, a bathtub faucet and/or other bathtub hardware, a toilet, etc. - however, location information, labels and provided instructions are not illustrated in this example. In a similar manner, image 250g2 for the kitchen includes indications 131w of objects in the kitchen that are identified and for which corresponding attribute data is determined, which in this example includes a refrigerator, a stove on a kitchen island, a sink faucet and/or other sink hardware, a countertop and/or backsplash beside the sink, etc. - however, location information, labels and provided instructions are not illustrated in this example. It will be appreciated that various other types of objects and other attributes may be determined in these and other rooms, and further used to generate corresponding building description information, and that these types of data illustrated in Figures 2E-2G are non-exclusive examples provided for the purpose of illustration.

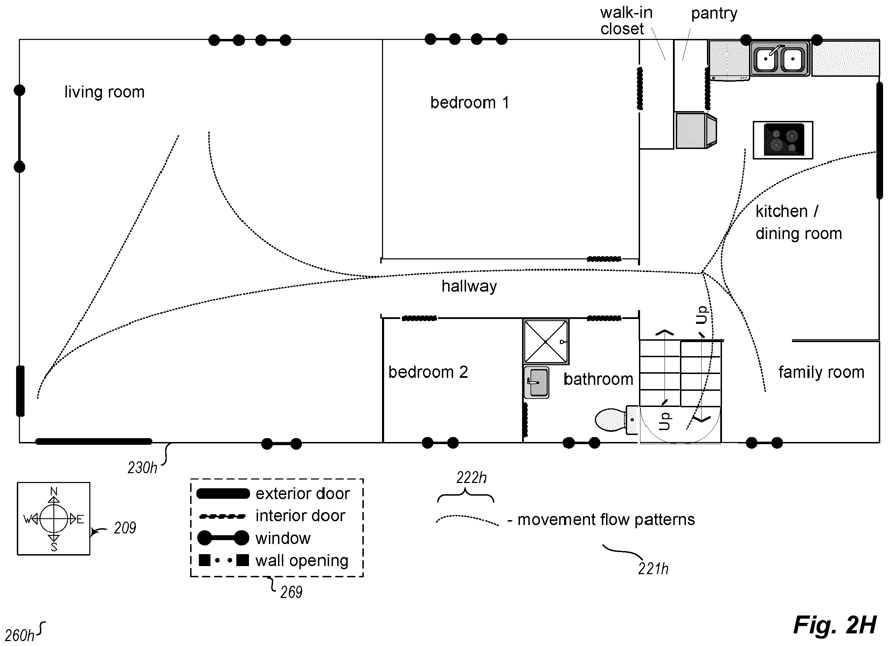

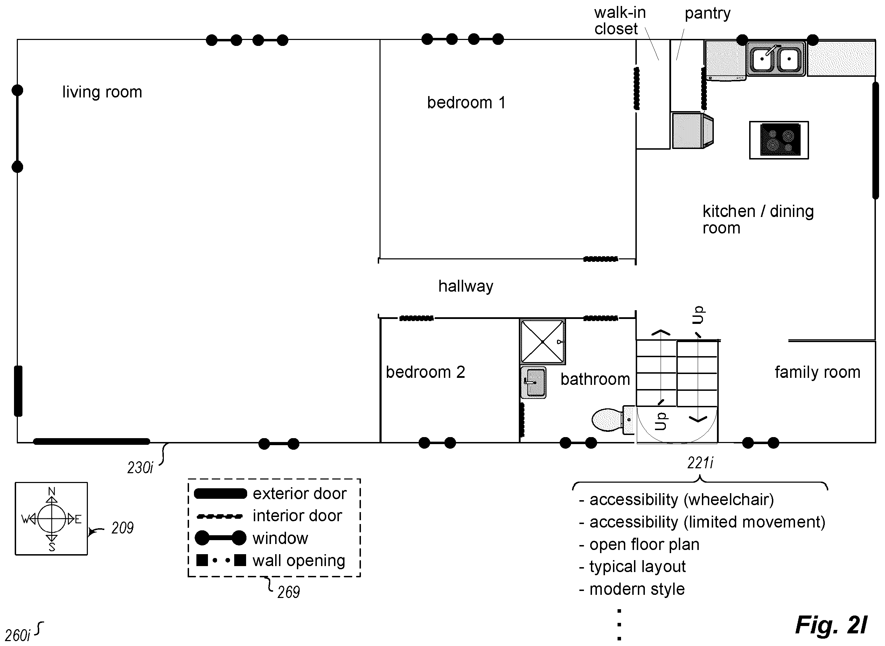

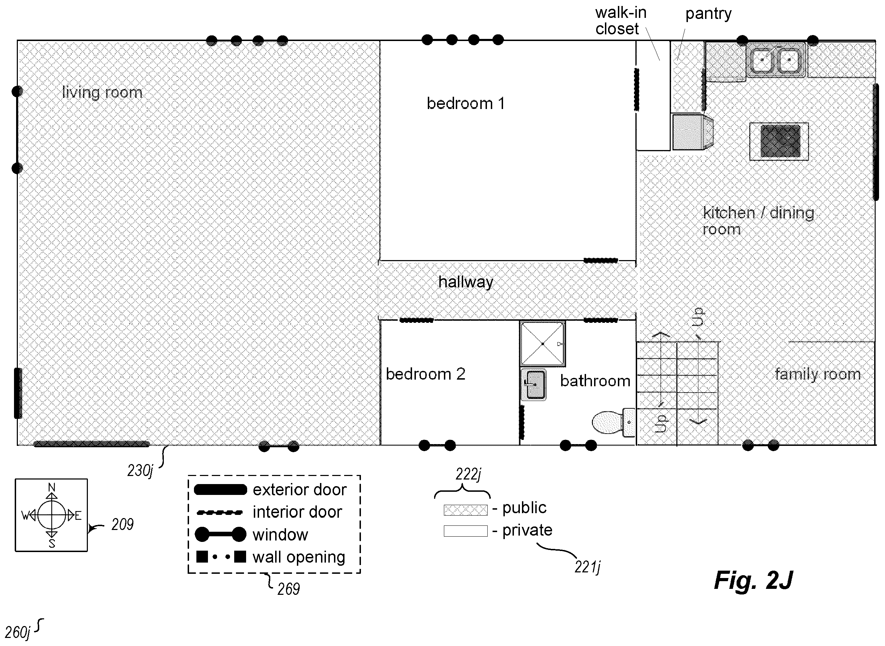

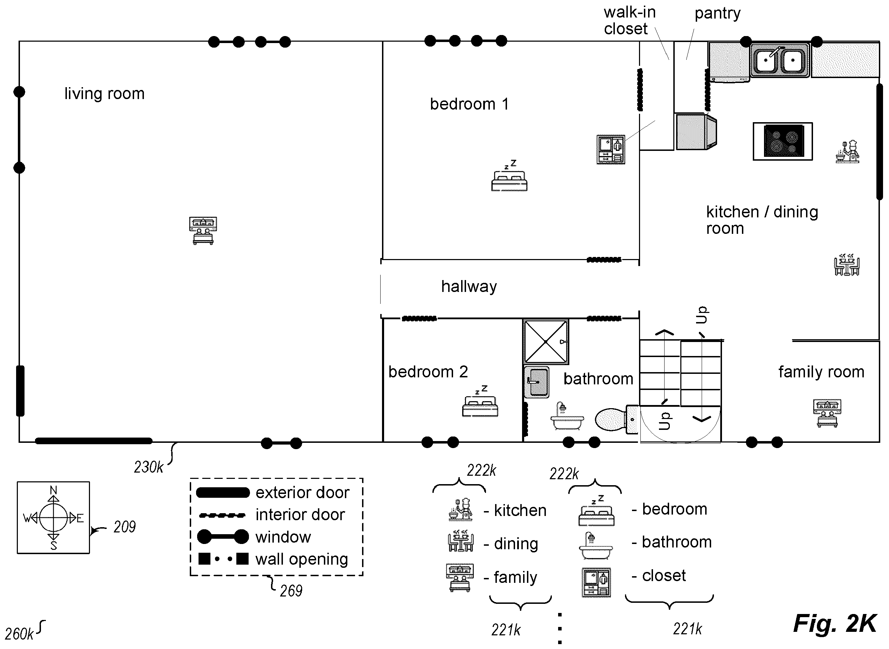

Figures 2H-2K continue the examples of Figures 2A-2G, and provide additional information related to analyzing floor plan information to determine additional attributes for the building. In particular, Figure 2H illustrates information 260h that includes an example 2D floor plan 230h of the building, which includes determined information 222h about determined expected movement flow pattern attributes through the building, as indicated using corresponding label 221h. In a similar manner, Figure 2I provides additional information 260i related to analyzing floor plan 230i to determine information about various types of subjective attributes for the building (e.g., wheelchair accessibility, accessibility for people with limited walking mobility, open floor plan, a typical layout, a modern style, etc.), as indicated using corresponding label 221i. Figure 2J similarly provides additional information 260j related to analyzing floor plan 230j to determine information about areas of the building that correspond to public and private space attributes 222j, as indicated using corresponding label 221j. In addition, Figure 2K provides additional information 260k related to analyzing floor plan 230k to determine information about room type and/or functionality attributes 222k of the building (e.g., bedroom, bathroom, kitchen, dining, family room, closet, etc.), as indicated using corresponding label 221k. It will be appreciated that determinations of particular attributes about rooms and/or the building as a whole may be determined from analysis of such a floor plan in various manners, and that the types of information illustrated in Figures 2H-2K are non-exclusive examples provided for the purpose of illustration, such that similar and/or other types of information may be determined in other manners in other embodiments.

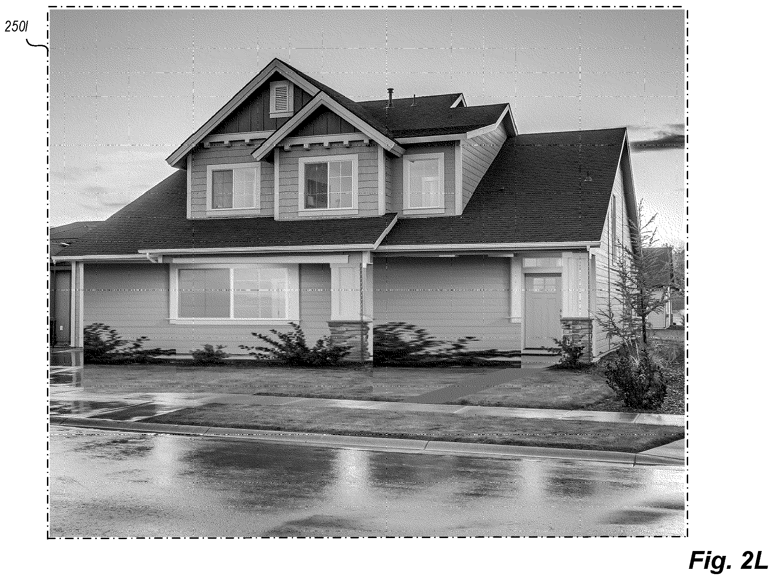

Figure 2L continues the examples of Figures 2A-2K, and illustrates an example image 2501 that corresponds to an exterior of the building 198. Analysis of the visual data of one or more such exterior images (*e.g.*, one or more overhead images, images from an adjacent street, images from the yard, etc.) optionally along with analysis of additional building information (*e.g.*, a floor plan), may be used to determined additional attributes about the building, such as a house style or other building style, a number of stories, exterior color and surface material, roof type and color, etc., and may further in some embodiments be used to determine additional attributes about the property on which the building is located (*e.g.*, external areas, types of material covering external areas, objects located in external areas, etc.). Additional details are included elsewhere herein regarding such determination of additional attributes related to an exterior of a building and a surrounding property.

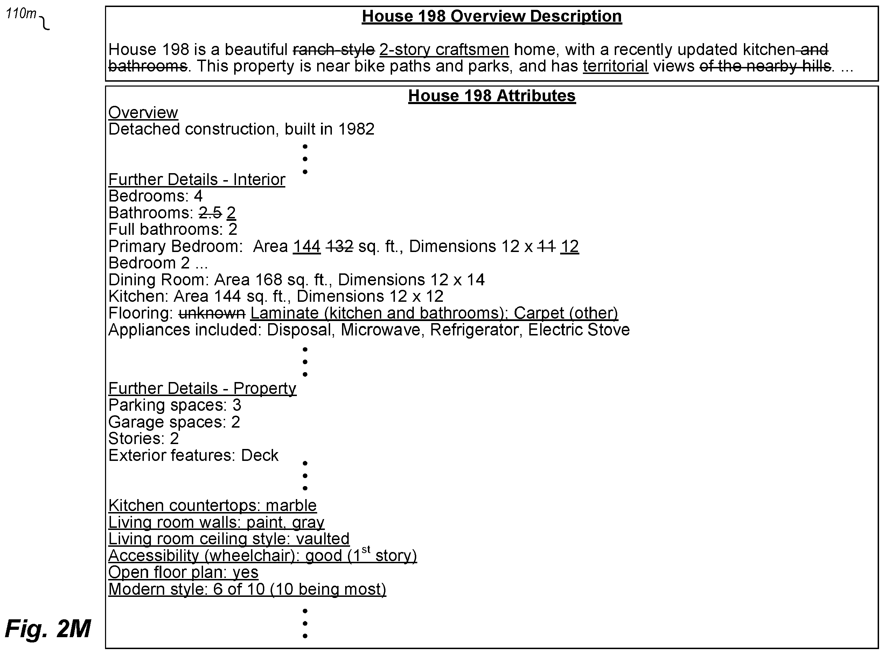

Figure 2M continues the examples of Figures 2A-2L, and illustrates information 110m that is based at least in part on building description information that is generated from determined building attribute information, such as from attributes determined in part based on the examples of Figures 2E-2L. In the example of Figure 2M, information 110m reflects an updated version of building description information 110b of Figure 1B - while some of the prior information 110b is retained in 110m, it is not explicitly indicated as having been validated in this example, but may be so validated and optionally indicated in other embodiments and situations. In the example of Figure 2M, the overview textual description of building description information 110m includes updated information about the type of house style (*e.g.*, determined to be a two-story craftsman home, such as based at least in part on the analysis of the exterior image of Figure 2L and optionally floor plan information), removal of information about the bathrooms having been recently updated (*e.g.*, based at least in part on a determination of attributes of the bathroom rooms that do not correspond to a recent update), changes to information about the view from the house (*e.g.*, based at least in part on analysis of visual data from images showing views from windows of the house and/or other additional information about the building's location, orientation and surroundings), etc. For the purposes of this example, the changes are shown using revision marks for the benefit of the reader, but such revision marks may not be included if such updated building description information is provided to an end user (*e.g.*, might be included if provided to a BADUM system operator user, such as for use in review and/or verification of the changes). In addition, various of the attribute data has also been updated, including objective attribute information about the types of rooms (*e.g*., to correct information about the quantity of bathrooms, the sizes of particular rooms, etc.), about surface materials of the floors (*e.g.*, to add information that was missing in existing building information 110b), and to add various other attribute information that was not part of the existing building information (*e.g.*, about surface materials of kitchen counter tops, living room walls, living room ceiling style, etc.). In addition to such objective attribute information, additional subjective attribute information has also been added to the building information, such as related to wheelchair accessibility, having an open floor plan, whether or not the house layout reflects a modern style, etc. It will be appreciated that a variety of other types of updates to existing building information may be made in other embodiments and situations, and that in some embodiments and situations entirely new building information will be generated based on the attribute information determined for the building.

With respect to generating building description information from determined building attribute information, the BVGUM system may in at least some embodiments and situations perform such generating using one or more trained language models (*e.g.*, knowledge-enhanced language, or KENGL, models) and/or one or more trained Vision and Language (VLM) models. In at least some embodiments and situations, the one or more trained VLM models that are used are large models that are trained to generate a description/caption for an input image using a large corpus of training tuples (*e.g.*, Image, Caption tuples) - some benefits of VLM models include that there is no need to explicitly prompt the model regarding the entities you would like it to describe, which often results in descriptions that are more abstract and compelling. In at least some embodiments and situations, the one or more trained language models may include at least one of pretrained language models, knowledge-enhanced language models, parsing and/or labeling and/or classification models (*e.g*., dependency parsers, constituency parsers, sentiments classifiers, semantic role labelers, etc.), algorithms used to control linguistic quality (*e.g.*, tokenizers, lemmatizers, regular expression matching, etc.), multimodal vision and language models capable of auto-regressive or masked decoding, etc. - such labeling and/or classification models may include, for example, semantic role labelers, sentiment classifiers, and semantic classifiers to identify semantic concepts related to the entire sequence of words and tokens or any of its components (*e.g.*, identification of semantic roles of entities in the sequence such as patient or agent as well as classifying the overall sentiment or semantics of a sequence such as how positive or negative it is about the subject, how fluent the sequence is, or how well it encourages the reader to take some action). The one or more trained language models may, for example, perform an iterative generation (decoding) of words, subwords, and tokens conditioned on prompts, prefixes, control codes, and representations of contextual information such as features derived from visual/sensor information, knowledge bases and/or graphs - parsing models may further perform operations including analyzing the internal structure of a sequence of words and tokens to identify its components in accordance with one or more grammars (*e.g.*, dependency, context free grammar, head-driven phrase structure grammar, etc.), such as to identify modifications that can be made to a sequence of words, subwords and/or tokens to further develop a desired linguistic quality. The one or more trained language models may, for example, be organized into a directed acyclic graph providing a structure in which inputs, outputs, data sources, and models interact, with the structure being aligned with the data sources, such as with respect to one or more of the following: spatial, where the context of text generation is related to a specific point in a building such as the location or room that a panorama was taken in so that the generated text will be aligned with this location; temporal, where the context of text generation is a temporal sequence of frames in a video sequence or slideshow so that the generated text will be aligned with this sequence of frames; etc. Inputs to the one or more trained language models may include, for example, one or more of the following: structured and/or unstructured data sources (*e.g.*, publicly or privately available, such as property records, tax records, MLS records, Wikipedia articles, homeowners association and/or covenant documents, news articles, nearby or visible landmarks, etc.) that provide information regarding the building and/or associated physical space under analysis and its surroundings and/or that provide general and commonsense information about buildings and a real estate market (*e.g.*, housing and associated elements, overall housing market information, information related to fair housing practices, bias associated with terms and phrases that may aid in language generation, etc.); information about objects and/or other attributes (*e.g.*, fixture types and locations, surface material, surface color, surface texture, room size, degree of natural light present in a room, walking score, expected commute times, etc.); captured and/or synthesized visual and/or sensor information along with any derivatives, such as structured and unstructured sequences (including singletons) of images, panoramas, videos, depth maps, point clouds, and segmentation maps; etc. The one or more trained language models may further be designed and/or configured to, for example, implement one or more of the following: modality, to reflect the way in which language can express relationships to reality and truth (e.g., something that is prohibited, such as "you shouldn't go to school"; advice provided through subject auxiliary inversion, such as "shouldn't you go to school?"; etc.); fluency, to reflect a measure of the natural quality of language with respect to a set of grammar rules (*e.g.*, "big smelly brown dog" instead of "smelly brown big dog"); style, to reflect patterns of word and grammatical construction selection (*e.g.*, short descriptions that uses interesting and engaging language; informal style, such as used for texting; formal style, such as used for an English paper or conference submission; voice, to reflect the way in which subjects and objects are organized relative to a verb (*e.g.*, active and passive voice); etc.

With respect to using determined building information to validate and/or correct existing building information, the BVGUM system may in at least some embodiments and situations perform such activities using natural language visual reasoning and/or by comparing information in existing building information (referred to herein as a `claim') with a knowledge graph generated to represent a building. In at least some embodiments and situations, natural language visual reasoning uses a language model that ingests an (image, sentence) pair and outputs a probability that the sentence is true about the picture - for example, a picture of Julius and Ethel Rosenberg coupled with the sentence "Caught spying for the Soviet Union" would be expected to output a high probability that the sentence is true about the image. Such a model could be used to gauge the validity of a claim about a building by aggregating the true/false predictions made for the claim coupled with each of the photos available for the building. For example, to validate a statement such as "beautiful swimming pool" for a particular building, that statement could be coupled with some or all images for the building (*e.g.*, all exterior images, images in which water is detected, etc.) and consider the claim validated if at least one of the images has a 'true' prediction from the model (*e.g*., a true prediction that exceeds a defined threshold). In at least some embodiments and situations, knowledge graphs and/or knowledge bases (collectively referred to herein as 'knowledge structures') are represented as a collections of subject-predicate-object relationships between entities considered to be "true" about those entities. Given a knowledge structure that includes building facts, such as derived at least in part from determined building information and/or from independent sources, a claim about a building may be validated by parsing that claim into its representative subject-predicate-object relationships (*e.g.*, using dependency parsing), and then comparing those parsed relationships with the information in the knowledge structure for conditions of entailment or contradiction using formal semantics - if the claim is found to be contradicted, and the facts in the knowledge structure are considered to be more reliable than the existing building information (*e.g.*, based at least in part on images acquired at the building), then the claim information could be replaced in the existing information with information from the knowledge structure, or could be otherwise indicated. For example, a choice to either remove or replace such a claim may be based on various factors (*e.g.*, grammaticality) - in the "House 198 Overview Description" section of information 110m of Figure 2M, "and bathrooms" can be removed and the sentence will remain grammatical, for example, but removing "paths and parks" would leave an ungrammatical clause. If replacement of a claim is performed, pretrained language models may be used as part of doing so, such as to exchange words composing the contradicted claim with a special [MASK] token that, when ingested, signals a language model to fill in these masked spaces with new words that are appropriate for the context and other inputs - for example, in Figure 2M, the claim "ranch style" was determined to be replaced (*e.g.*, to not be supported, to be inaccurate, etc.), and a new sentence "House 198 is a beautiful [MASK] [MASK] home, ..." may be inputted into a VLM model along with an exterior picture (e.g., a picture from the street), or into a KENLG model with a prompt "home style" and an output of "2-story craftsmen".

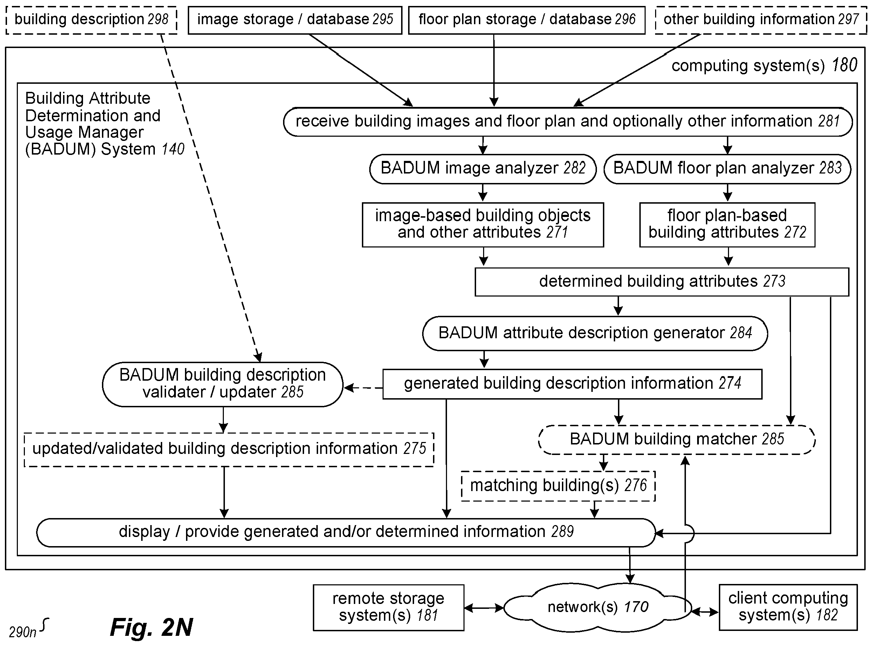

Figure 2N continues the examples of Figures 2A-2M, and illustrates information 290n showing example data flow interactions for at least some automated operations of the BADUM system. In particular, an embodiment of the BADUM system 140 is illustrated executing on one or more computing systems 180, and in this example embodiment receives information about a building to be analyzed that includes stored images from storage or database 295, a floor plan from storage or database 296, and optionally other building information 297. The input information is received in step 281, with corresponding image information being forwarded to a BADUM image analyzer component 282 for analysis, and with corresponding floor plan information being forwarded to a BADUM floor plan analyzer component 283 for analysis - as discussed in greater detail elsewhere herein, such components 282 and/or 283 may include or use one or trained machine learning models. The BADUM image analyzer component 282 analyzes the visual data of the images (and optionally associated acquisition metadata) in order to generate image-based building object information and other attributes 271, and the BADUM floor plan analyzer component 283 analyzes the floor plan and optionally additional building information 297 to generate floor plan-based building attributes, with the output of the components 282 and 283 forming the determined building attributes 273 for the building. The determined building attributes 273 are then supplied to a BADUM attribute description generator component 284, which generates building description information 274 based on those attributes - as discussed in greater detail elsewhere herein, such a component 284 may include or use one or more trained language models. In at least some embodiments and situations, a BADUM building description validator/updater component 285 is additionally provided, and if so may receive existing building description information 298 and the newly generated building description information 274, and use the new information 274 to generate updated and/or validated building description information 275. In some embodiments, the BADUM system may further include a BADUM building matcher component 285, such as to receive the determined building attributes 273 and generated building description information 274, and to use that information to identify that the current building matches one or more specified criteria (e.g., at a later time after the generation of the building information, such as upon receipt of corresponding criteria from one or more client computing systems 182 over one or more networks 170) - if so, the component 285 produces matching building information 276 that may include information about the building that was analyzed based on the generated building information 273 and 274. After one or more of these types of information 273, 274, 275 and/or 276 are generated, the BADUM system may further perform step 289 to display or otherwise provide some or all of the generated and/or determined information, such as to send such information over the networks 170 to one or more client computing systems 182 for display, to one or more remote storage systems 181 for storage, or otherwise to one or more other recipients for further use. Additional details are included elsewhere herein regarding operations of the various BADUM system components, and of the corresponding types of information that is analyzed and generated.

Various details have been provided with respect to Figures 2A-2N, but it will be appreciated that the provided details are non-exclusive examples included for illustrative purposes, and other embodiments may be performed in other manners without some or all such details.

Figure 3 is a block diagram illustrating an embodiment of one or more server computing systems 300 executing an implementation of a BADUM system 340 (e.g., in a manner analogous to server computing system(s) 180 and BADUM system 140 of Figure 1A), and one or more server computing systems 380 executing an implementation of an ICA system 388 and an MIGM system 389 - the server computing system(s) and BADUM and/or ICA and/or MIGM systems may be implemented using a plurality of hardware components that form electronic circuits suitable for and configured to, when in combined operation, perform at least some of the techniques described herein. One or more computing systems and devices may also optionally be executing a building information access system (such as server computing system(s) 300) and/or optional other programs 335 and 383 (such as server computing system(s) 300 and 380, respectively, in this example), although such as building information access system is not illustrated in this example. In the illustrated embodiment, each server computing system 300 includes one or more hardware central processing units ("CPUs") or other hardware processors 305, various input/output ("I/O") components 310, storage 320, and memory 330, with the illustrated I/O components including a display 311, a network connection 312, a computer-readable media drive 313, and other I/O devices 315 (e.g., keyboards, mice or other pointing devices, microphones, speakers, GPS receivers, etc.). Each server computing system 380 may have similar components, although only one or more hardware processors 381, memory 387, storage 384 and I/O components 382 are illustrated in this example for the sake of brevity.

The server computing system(s) 300 and executing BADUM system 340, server computing system(s) 380 and executing ICA and MIGM systems 388-389, and optionally executing building information access system (not shown), may communicate with each other and with other computing systems and devices in this illustrated embodiment, such as via one or more networks 399 (e.g., the Internet, one or more cellular telephone networks, etc.), including to interact with user client computing devices 390 (e.g., used to view building information such as generated building descriptions, floor plans, images and/or other related information, such as by interacting with or executing a copy of the building information access system), and/or mobile image acquisition devices 360 (e.g., used to acquire images and/or other information for buildings or other environments to be modeled, such as in a manner analogous to computing device 185 of Figure 1A), and/or optionally other navigable devices 395 that receive and use floor plans and optionally other generated information for navigation purposes (e.g., for use by semi-autonomous or fully autonomous vehicles or other devices). In other embodiments, some of the described functionality may be combined in less computing systems, such as to combine the BADUM system 340 and a building information access system in a single system or device, to combine the BADUM system 340 and the image acquisition functionality of device(s) 360 in a single system or device, to combine the ICA and MIGM systems 388-389 and the image acquisition functionality of device(s) 360 in a single system or device, to combine the BADUM system 340 and one or both of the ICA and MIGM systems 388-389 in a single system or device, to combine the BADUM system 340 and the ICA and MIGM systems 388-389 and the image acquisition functionality of device(s) 360 in a single system or device, etc.

In the illustrated embodiment, an embodiment of the BADUM system 340 executes in memory 330 of the server computing system(s) 300 in order to perform at least some of the described techniques, such as by using the processor(s) 305 to execute software instructions of the system 340 in a manner that configures the processor(s) 305 and computing system 300 to perform automated operations that implement those described techniques. The illustrated embodiment of the BADUM system may include one or more components, not shown, to each perform portions of the functionality of the BADUM system, such as in a manner discussed elsewhere herein, and the memory may further optionally execute one or more other programs 335 - as one specific example, a copy of the ICA and/or MIGM systems may execute as one of the other programs 335 in at least some embodiments, such as instead of or in addition to the ICA and/or MIGM systems 388-389 on the server computing system(s) 380, and/or a copy of a building information access system may execute as one of the other programs 335. The BADUM system 340 may further, during its operation, store and/or retrieve various types of data on storage 320 (e.g., in one or more databases or other data structures), such as various types of user information 322, floor plans and other associated information 324 (*e.g*., generated and saved 2.5D and/or 3D models, building and room dimensions for use with associated floor plans, additional images and/or annotation information, etc.), images and associated information 326, generated building description information and other generated building information (*e.g.*, determined building attributes) 328, and/or various types of optional additional information 329 (*e.g.*, various analytical information related to presentation or other use of one or more building interiors or other environments).

In addition, embodiments of the ICA and MIGM systems 388-389 execute in memory 387 of the server computing system(s) 380 in the illustrated embodiment in order to perform techniques related to generating panorama images and floor plans for buildings, such as by using the processor(s) 381 to execute software instructions of the systems 388 and/or 389 in a manner that configures the processor(s) 381 and computing system(s) 380 to perform automated operations that implement those techniques. The illustrated embodiment of the ICA and MIGM systems may include one or more components, not shown, to each perform portions of the functionality of the ICA and MIGM systems, respectively, and the memory may further optionally execute one or more other programs 383. The ICA and/or MIGM systems 388-389 may further, during operation, store and/or retrieve various types of data on storage 384 (e.g., in one or more databases or other data structures), such as video and/or image information 386 acquired for one or more buildings (*e.g.*, 360° video or images for analysis to generate floor plans, to provide to users of client computing devices 390 for display, etc.), floor plans and/or other generated mapping information 387, and optionally other information 385 (*e.g.*, additional images and/or annotation information for use with associated floor plans, building and room dimensions for use with associated floor plans, various analytical information related to presentation or other use of one or more building interiors or other environments, etc.) - while not illustrated in Figure 3, the ICA and/or MIGM systems may further store and use additional types of information, such as about other types of building information to be analyzed and/or provided to the BADUM system, about ICA and/or MIGM system operator users and/or end-users, etc.

Some or all of the user client computing devices 390 (*e.g.*, mobile devices), mobile image acquisition devices 360, optional other navigable devices 395 and other computing systems (not shown) may similarly include some or all of the same types of components illustrated for server computing system 300. As one non-limiting example, the mobile image acquisition devices 360 are each shown to include one or more hardware CPU(s) 361, I/O components 362, memory and/or storage 367, one or more imaging systems 365, IMU hardware sensors 369 (*e.g.*, for use in acquisition of video and/or images, associated device movement data, etc.), and optionally other components. In the illustrated example, one or both of a browser and one or more client applications 368 (*e.g.*, an application specific to the BADUM system and/or to ICA system and/or to the MIGM system) are executing in memory 367, such as to participate in communication with the BADUM system 340, ICA system 388, MIGM system 389 and/or other computing systems. While particular components are not illustrated for the other navigable devices 395 or other computing devices/systems 390, it will be appreciated that they may include similar and/or additional components.

It will also be appreciated that computing systems 300 and 380 and the other systems and devices included within Figure 3 are merely illustrative and are not intended to limit the scope of the present invention. The systems and/or devices may instead each include multiple interacting computing systems or devices, and may be connected to other devices that are not specifically illustrated, including via Bluetooth communication or other direct communication, through one or more networks such as the Internet, via the Web, or via one or more private networks (*e.g.*, mobile communication networks, etc.). More generally, a device or other computing system may comprise any combination of hardware that may interact and perform the described types of functionality, optionally when programmed or otherwise configured with particular software instructions and/or data structures, including without limitation desktop or other computers (*e.g.*, tablets, slates, etc.), database servers, network storage devices and other network devices, smart phones and other cell phones, consumer electronics, wearable devices, digital music player devices, handheld gaming devices, PDAs, wireless phones, Internet appliances, and various other consumer products that include appropriate communication capabilities. In addition, the functionality provided by the illustrated BADUM system 340 may in some embodiments be distributed in various components, some of the described functionality of the BADUM system 340 may not be provided, and/or other additional functionality may be provided.

It will also be appreciated that, while various items are illustrated as being stored in memory or on storage while being used, these items or portions of them may be transferred between memory and other storage devices for purposes of memory management and data integrity. Alternatively, in other embodiments some or all of the software components and/or systems may execute in memory on another device and communicate with the illustrated computing systems via inter-computer communication. Thus, in some embodiments, some or all of the described techniques may be performed by hardware means that include one or more processors and/or memory and/or storage when configured by one or more software programs (*e.g.*, by the BADUM system 340 executing on server computing systems 300, by a Building Information Access system executing on server computing systems 300 or other computing systems/devices, etc.) and/or data structures, such as by execution of software instructions of the one or more software programs and/or by storage of such software instructions and/or data structures, and such as to perform algorithms as described in the flow charts and other disclosure herein. Furthermore, in some embodiments, some or all of the systems and/or components may be implemented or provided in other manners, such as by consisting of one or more means that are implemented partially or fully in firmware and/or hardware (*e.g*., rather than as a means implemented in whole or in part by software instructions that configure a particular CPU or other processor), including, but not limited to, one or more application-specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), etc. Some or all of the components, systems and data structures may also be stored (*e.g.*, as software instructions or structured data) on a non-transitory computer-readable storage mediums, such as a hard disk or flash drive or other non-volatile storage device, volatile or non-volatile memory (*e.g.*, RAM or flash RAM), a network storage device, or a portable media article (*e.g.*, a DVD disk, a CD disk, an optical disk, a flash memory device, etc.) to be read by an appropriate drive or via an appropriate connection. The systems, components and data structures may also in some embodiments be transmitted via generated data signals (*e.g.*, as part of a carrier wave or other analog or digital propagated signal) on a variety of computer-readable transmission mediums, including wireless-based and wired/cable-based mediums, and may take a variety of forms (*e.g.*, as part of a single or multiplexed analog signal, or as multiple discrete digital packets or frames). Such computer program products may also take other forms in other embodiments. Accordingly, embodiments of the present disclosure may be practiced with other computer system configurations.

Figures 4A-4B illustrate an example embodiment of a flow diagram for a Building Attribute Determination and Usage Manager (BADUM) System routine 400. The routine may be performed by, for example, execution of the BADUM system 140 of Figure 1A, the BADUM system 340 of Figure 3, and/or an BADUM system as described with respect to Figures 2D-2N and elsewhere herein, such as to perform automated operations related to generating information about attributes of buildings from analysis of building information that includes floor plans and acquired building images and further generating textual descriptions of the attributes, and to subsequently using the generated building information in one or more automated manners. In the example embodiment of Figures 4A-4B, the indicated buildings may be houses or other buildings, and the analysis of building information includes determining building attributes and generated associated building description information, but in other embodiments, other types of data structures and analyses may be used for other types of structures or for non-structure locations, and the generated building information may be used in other manners than those discussed with respect to routine 400, as discussed elsewhere herein.

The illustrated embodiment of the routine begins at block 405, where information or instructions are received. The routine continues to block 410 to determine whether the instructions or other information received in block 405 indicate to generate description information for an indicated building based at least in part on determined attributes of the indicated building, and if so the routine continues to perform at least blocks 420-450 to do so, and otherwise continues to block 470.

In block 420, the routine then determines whether a floor plan and/or images are available for the building, and if so proceeds to block 422 to retrieve such existing building information. If it is instead determined in block 420 that the building information is not available, the routine instead proceeds to perform blocks 425-440 to generate such images and a floor plan and associated information, including to optionally obtain available information about the building in block 425 (*e.g.*, building dimensions and/or other information about the size and/or structure of the building; external images of the building, such as from overhead and/or from a nearby street; etc., such as from public sources), to initiate execution of an ICA system routine in block 430 to acquire images and optionally additional data for the building (with one example of such a routine being illustrated in Figure 5), and to initiate execution of a MIGM system routine in block 440 to use the acquired images from block 430 to generate a floor plan and optionally additional mapping-related data for the building (with one example of such a routine being illustrated in Figures 6A-6B).

In blocks 442-465, the routine performs several activities as part of using the images and floor plan from blocks 430 and 440 or from block 422 to generate information for the building. In particular, in block 442, the routine includes analyzing each image using one or more trained machine learning models (*e.g*., one or more trained classification neural networks) to identify structural elements and other objects, and to determine attributes associated with such objects (*e.g.*, color, surface material, style, locations, orientations, descriptive labels, etc.). In block 444, the routine then analyzes the building floor plan to determine further attributes for the building using one or more trained machine learning models (*e.g.*, one or more trained classification neural networks), such as based at least in part on layout information (*e.g.*, inter-connectedness and other adjacency information for groups of two or more rooms) - the determined attributes may, for example, include attributes that each classify the building floor plan according to one or more subjective factors (*e.g.*, accessibility friendly, an open floor plan, an atypical floor plan, etc.), a type of room for some or all rooms in the building, types of inter-room connections and other adjacencies between some or all rooms (*e.g.*, connected by a door or other opening, adjacent with an intervening wall but not otherwise connected, not adjacent, etc.), one or more objective attributes, etc. In block 446, the routine then optionally analyzes obtained building information (*e.g.*, external images, the floor plan, etc.) to further determine one or more attributes associated with the building exterior, such as a type of house style or other building style, color, etc. After block 446, the routine continues to block 450 to, for some or all objects and/or attributes determined in blocks 442-446, generate descriptions of the objects and attributes using one or more trained language models (*e.g.*, one or more trained transformer-based machine learning models), and optionally combine the generated descriptions to generate an overall building textual description. The routine in block 450 may further optionally use generated building information from blocks 442-450 (*e.g.*, determined objects and attributes, generated textual building descriptions, etc.) to create a new building description.

After block 450, the routine continues to block 455 to determine whether to use the generated building information from blocks 442-450 to validate and/or update existing building description information, and if so continues to block 460 to obtain existing building description information (*e.g.*, retrieved in block 425, received in block 405, etc.). In block 465, the routine then compares generated building information from blocks 442-450 (*e.g.*, determined objects and attributes, generated textual building descriptions, etc.) to information in the existing building description information to identify contents of the existing building description that are incorrect, incomplete and/or missing in comparison to the determined objects and attributes, and optionally use the generated building information to validate and/or correct some or all of the existing building description. After block 465, or if it is determined in block 455 to not validate or update existing building description information, the routine continues to block 488 to store some or all of the generated building information from blocks 420-485, and optionally provides at least some of the generated building information (e.g., to a user or other entity from which the information and/or instructions are received in block 405).

If it is instead determined in block 410 that the instructions or other information received in block 405 are not to generate building information for an indicated building, the routine continues instead to block 470 to determine whether the instructions or other information received in block 405 are to identify one or more target buildings that satisfy criteria based at least in part on building attributes, and if not continues to block 490. Otherwise, the routine continues to block 465 to retrieve building descriptions and attribute information for candidate buildings (e.g., generated building information previously determined in blocks 442-450 for one or more indicated buildings) and to compare their attributes and other generated building information to the specified criteria. In block 480, the routine then, for each candidate building, determine a degree of match of the candidate building's information to the criteria - if there are multiple indicated criteria, the determining of the degree of match may include combining the information for the multiple criteria in one or more manners (*e.g.*, an average, a cumulative total, etc.). The routine further optionally rank orders the multiple candidate buildings based on their degrees of match, and selects one or more best matches to use as identified target buildings (*e.g.*, all matches above a defined threshold, the single best match, etc., and optionally based on instructions or other information received in block 405), with those selected one or more best matches having the highest degrees of match to the specified criteria. In block 485, the routine then presents or otherwise provides information about the selected candidate building(s) (*e.g.*, provides information about a selected candidate building for use in presentation via a building information access routine, with one example of such a routine discussed with respect to Figure 7).

If it is instead determined in block 470 that the information or instructions received in block 405 are not to identify one or more other target buildings that match one or more specified criteria, the routine continues instead to block 490 to perform one or more other indicated operations as appropriate. Such other operations may include, for example, receiving and responding to requests for previously generated building information (*e.g*., requests for such information for display on one or more client devices, requests for such information to provide it to one or more other devices for use in automated navigation, etc.), training one or more neural networks or other machine learning models (*e.g.*, classification neural networks) to determine objects and associated attributes from analysis of visual data of images and/or other acquired environmental data, training one or more neural networks (*e.g.*, classification neural networks) or other machine learning models to determine building attributes from analysis of building floor plans (*e.g.*, according to one or more subjective factors, such as accessibility friendly, an open floor plan, an atypical floor plan, a non-standard floor plan, etc.), training one or more machine learning models (*e.g.*, language models) to generate building description information from determined objects and attributes for a building, obtaining and storing information about users of the routine (*e.g.*, search and/or selection preferences of a current user), etc.

After blocks 485 or 488 or 490, the routine continues to block 495 to determine whether to continue, such as until an explicit indication to terminate is received, or instead only if an explicit indication to continue is received. If it is determined to continue, the routine returns to block 405 to wait for and receive additional instructions or information, and otherwise continues to block 499 and ends.

Figure 5 illustrates an example flow diagram of an embodiment of an ICA (Image Capture & Analysis) system routine 500. The routine may be performed by, for example, the ICA system 160 of Figure 1, the ICA system 388 of Figure 3, and/or an ICA system as described with respect to Figures 2A-2N and elsewhere herein, such as to acquire 360° panorama images and/or other images at acquisition locations within buildings or other structures, such as for use in subsequent generation of related floor plans and/or other mapping information. While portions of the example routine 500 are discussed with respect to acquiring particular types of images at particular acquisition locations, it will be appreciated that this or a similar routine may be used to acquire video (with video frame images) and/or other data (*e.g.*, audio), whether instead of or in addition to such panorama images or other perspective images. In addition, while the illustrated embodiment acquires and uses information from the interior of a target building, it will be appreciated that other embodiments may perform similar techniques for other types of data, including for non-building structures and/or for information external to one or more target buildings of interest. Furthermore, some or all of the routine may be executed on a mobile device used by a user to acquire image information, and/or by a system remote from such a mobile device. In at least some embodiments, the routine 500 may be invoked from block 430 of routine 400 of Figures 4A-4B, with corresponding information from routine 500 provided to routine 400 as part of implementation of that block 430, and with processing control returned to routine 400 after blocks 577 and/or 599 in such situations - in other embodiments, the routine 400 may proceed with additional operations in an asynchronous manner without waiting for such processing control to be returned (*e.g.*, to proceed with other processing activities while waiting for the corresponding information from the routine 500 to be provided to routine 400).

The illustrated embodiment of the routine begins at block 505, where instructions or information are received. At block 510, the routine determines whether the received instructions or information indicate to acquire visual data and/or other data representing a building interior (optionally in accordance with supplied information about one or more additional acquisition locations and/or other guidance acquisition instructions), and if not continues to block 590. Otherwise, the routine proceeds to block 512 to receive an indication to begin the image acquisition process at a first acquisition location (*e.g.*, from a user of a mobile image acquisition device that will perform the acquisition process). After block 512, the routine proceeds to block 515 in order to perform acquisition location image acquisition activities for acquiring a 360° panorama image for the acquisition location in the interior of the target building of interest, such as via one or more fisheye lenses and/or non-fisheye rectilinear lenses on the mobile device and to provide horizontal coverage of at least 360° around a vertical axis, although in other embodiments other types of images and/or other types of data may be acquired. As one non-exclusive example, the mobile image acquisition device may be a rotating (scanning) panorama camera equipped with a fisheye lens (*e.g.*, with 180° of horizontal coverage) and/or other lens (*e.g.*, with less than 180° of horizontal coverage, such as a regular lens or wide-angle lens or ultrawide lens). The routine may also optionally obtain annotation and/or other information from the user regarding the acquisition location and/or the surrounding environment, such as for later use in presentation of information regarding that acquisition location and/or surrounding environment.

After block 515 is completed, the routine continues to block 520 to determine if there are more acquisition locations at which to acquire images, such as based on corresponding information provided by the user of the mobile device and/or received in block 505 - in some embodiments, the ICA routine will acquire only a single image and then proceed to block 577 to provide that image and corresponding information (*e.g.*, to return the image and corresponding information to the BADUM system and/or MIGM system for further use before receiving additional instructions or information to acquire one or more next images at one or more next acquisition locations). If there are more acquisition locations at which to acquire additional images at the current time, the routine continues to block 522 to optionally initiate the capture of linking information (e.g., acceleration data) during movement of the mobile device along a travel path away from the current acquisition location and towards a next acquisition location within the building interior. The captured linking information may include additional sensor data (*e.g*., from one or more IMU, or inertial measurement units, on the mobile device or otherwise carried by the user) and/or additional visual information (*e.g.*, images, video, etc.) recorded during such movement. Initiating the capture of such linking information may be performed in response to an explicit indication from a user of the mobile device or based on one or more automated analyses of information recorded from the mobile device. In addition, the routine may further optionally monitor the motion of the mobile device in some embodiments during movement to the next acquisition location, and provide one or more guidance cues (*e.g.*, to the user) regarding the motion of the mobile device, quality of the sensor data and/or visual information being captured, associated lighting/environmental conditions, advisability of capturing a next acquisition location, and any other suitable aspects of capturing the linking information. Similarly, the routine may optionally obtain annotation and/or other information from the user regarding the travel path, such as for later use in presentation of information regarding that travel path or a resulting inter-panorama image connection link. In block 524, the routine determines that the mobile device has arrived at the next acquisition location (*e.g.*, based on an indication from the user, based on the forward movement of the mobile device stopping for at least a predefined amount of time, etc.), for use as the new current acquisition location, and returns to block 515 in order to perform the acquisition location image acquisition activities for the new current acquisition location.

If it is instead determined in block 520 that there are not any more acquisition locations at which to acquire image information for the current building or other structure at the current time, the routine proceeds to block 545 to optionally preprocess the acquired 360° panorama images before their subsequent use (*e.g.*, for generating related mapping information, for providing information about structural elements or other objects of rooms or other enclosing areas, etc.), such as to produce images of a particular type and/or in a particular format (*e.g*., to perform an equirectangular projection for each such image, with straight vertical data such as the sides of a typical rectangular door frame or a typical border between 2 adjacent walls remaining straight, and with straight horizontal data such as the top of a typical rectangular door frame or a border between a wall and a floor remaining straight at a horizontal midline of the image but being increasingly curved in the equirectangular projection image in a convex manner relative to the horizontal midline as the distance increases in the image from the horizontal midline). In block 577, the images and any associated generated or obtained information is stored for later use, and optionally provided to one or more recipients (*e.g.*, to block 430 of routine 400 if invoked from that block). Figures 6A-6B illustrate one example of a routine for generating a floor plan representation of a building interior from the generated panorama information.

If it is instead determined in block 510 that the instructions or other information received in block 505 are not to acquire images and other data representing a building interior, the routine continues instead to block 590 to perform any other indicated operations as appropriate, such as to configure parameters to be used in various operations of the system (*e.g*., based at least in part on information specified by a user of the system, such as a user of a mobile device who captures one or more building interiors, an operator user of the ICA system, etc.), to respond to requests for generated and stored information (*e.g.*, to identify one or more groups of inter-connected linked panorama images each representing a building or part of a building that match one or more specified search criteria, one or more panorama images that match one or more specified search criteria, etc.), to generate and store inter-panorama image connections between panorama images for a building or other structure (*e.g.*, for each panorama image, to determine directions within that panorama image toward one or more other acquisition locations of one or more other panorama images, such as to enable later display of an arrow or other visual representation with a panorama image for each such determined direction from the panorama image to enable an end-user to select one of the displayed visual representations to switch to a display of the other panorama image at the other acquisition location to which the selected visual representation corresponds), to obtain and store other information about users of the system, to perform any housekeeping tasks, etc.

Following blocks 577 or 590, the routine proceeds to block 595 to determine whether to continue, such as until an explicit indication to terminate is received, or instead only if an explicit indication to continue is received. If it is determined to continue, the routine returns to block 505 to await additional instructions or information, and if not proceeds to step 599 and ends.

Figures 6A-6B illustrate an example embodiment of a flow diagram for a MIGM (Mapping Information Generation Manager) system routine 600. The routine may be performed by, for example, execution of the MIGM system 160 of Figure 1, the MIGM system 389 of Figure 3, and/or a MIGM system as described with respect to Figures 2A-2N and elsewhere herein, such as to determine a room shape for a room (or other defined area) by analyzing information from one or more images acquired in the room (e.g., one or more 360° panorama images), to generate a partial or complete floor plan for a building or other defined area based at least in part on one or more images of the area and optionally additional data captured by a mobile computing device and using determined room shapes, and/or to generate other mapping information for a building or other defined area based at least in part on one or more images of the area and optionally additional data captured by a mobile computing device. In the example of Figures 6A-6B, the determined room shape for a room may be a 2D room shape to represent the locations of the walls of the room or a 3D fully closed combination of planar surfaces to represent the locations of walls and ceiling and floor of the room, and the generated mapping information for a building (*e.g.,* a house) may include a 2D floor plan and/or 3D computer model floor plan, but in other embodiments, other types of room shapes and/or mapping information may be generated and used in other manners, including for other types of structures and defined areas, as discussed elsewhere herein. In at least some embodiments, the routine 600 may be invoked from block 440 of routine 400 of Figures 4A-4B, with corresponding information from routine 600 provided to routine 400 as part of implementation of that block 440, and with processing control returned to routine 400 after blocks 688 and/or 699 in such situations - in other embodiments, the routine 400 may proceed with additional operations in an asynchronous manner without waiting for such processing control to be returned (*e.g.,* to proceed to block 445 once the corresponding information from routine 600 is provided to routine 400, to proceed with other processing activities while waiting for the corresponding information from the routine 600 to be provided to routine 400, etc.).

The illustrated embodiment of the routine begins at block 605, where information or instructions are received. The routine continues to block 610 to determine whether image information is already available to be analyzed for one or more rooms (*e.g.,* for some or all of an indicated building, such as based on one or more such images received in block 605 as previously generated by the ICA routine), or if such image information instead is to be currently acquired. If it is determined in block 610 to currently acquire some or all of the image information, the routine continues to block 612 to acquire such information, optionally waiting for one or more users or devices to move throughout one or more rooms of a building and acquire panoramas or other images at one or more acquisition locations in one or more of the rooms (*e.g.,* at multiple acquisition locations in each room of the building), optionally along with metadata information regarding the acquisition and/or interconnection information related to movement between acquisition locations, as discussed in greater detail elsewhere herein - implementation of block 612 may, for example, include invoking an ICA system routine to perform such activities, with Figure 5 providing one example embodiment of an ICA system routine for performing such image acquisition. If it is instead determined in block 610 not to currently acquire the images, the routine continues instead to block 615 to obtain one or more existing panoramas or other images from one or more acquisition locations in one or more rooms (*e.g.,* multiple images acquired at multiple acquisition locations that include at least one image and acquisition location in each room of a building), optionally along with metadata information regarding the acquisition and/or interconnection information related to movement between the acquisition locations, such as may in some situations have been supplied in block 605 along with the corresponding instructions.

After blocks 612 or 615, the routine continues to block 620, where it determines whether to generate mapping information that includes a linked set of target panorama images (or other images) for a building or other group of rooms (referred to at times as a 'virtual tour', such as to enable an end user to move from any one of the images of the linked set to one or more other images to which that starting current image is linked, including in some embodiments via selection of a user-selectable control for each such other linked image that is displayed along with a current image, optionally by overlaying visual representations of such user-selectable controls and corresponding inter-image directions on the visual data of the current image, and to similarly move from that next image to one or more additional images to which that next image is linked, etc.), and if so continues to block 625. The routine in block 625 selects pairs of at least some of the images (*e.g.,* based on the images of a pair having overlapping visual content), and determines, for each pair, relative directions between the images of the pair based on shared visual content and/or on other captured linking interconnection information (*e.g.,* movement information) related to the images of the pair (whether movement directly from the acquisition location for one image of a pair to the acquisition location of another image of the pair, or instead movement between those starting and ending acquisition locations via one or more other intermediary acquisition locations of other images). The routine in block 625 may further optionally use at least the relative direction information for the pairs of images to determine global relative positions of some or all of the images to each other in a common coordinate system, and/or generate the inter-image links and corresponding user-selectable controls as noted above. Additional details are included elsewhere herein regarding creating such a linked set of images.

After block 625, or if it is instead determined in block 620 that the instructions or other information received in block 605 are not to determine a linked set of images, the routine continues to block 635 to determine whether the instructions received in block 605 indicate to generate other mapping information for an indicated building (*e.g.,* a floor plan), and if so the routine continues to perform some or all of blocks 637-685 to do so, and otherwise continues to block 690. In block 637, the routine optionally obtains additional information about the building, such as from activities performed during acquisition and optionally analysis of the images, and/or from one or more external sources (*e.g.,* online databases, information provided by one or more end users, etc.) - such additional information may include, for example, exterior dimensions and/or shape of the building, additional images and/or annotation information acquired corresponding to particular locations external to the building (*e.g.,* surrounding the building and/or for other structures on the same property, from one or more overhead locations, etc.), additional images and/or annotation information acquired corresponding to particular locations within the building (optionally for locations different from acquisition locations of the acquired panorama images or other images), etc.

After block 637, the routine continues to block 640 to select the next room (beginning with the first) for which one or more images (*e.g.,* 360° panorama images) acquired in the room are available, and to analyze the visual data of the image(s) for the room to determine a room shape (*e.g.,* by determining at least wall locations), optionally along with determining uncertainty information about walls and/or other parts of the room shape, and optionally including identifying other wall and floor and ceiling elements (*e.g.,* wall structural elements/objects, such as windows, doorways and stairways and other inter-room wall openings and connecting passages, wall borders between a wall and another wall and/or ceiling and/or floor, etc.) and their positions within the determined room shape of the room. In some embodiments, the room shape determination may include using boundaries of the walls with each other and at least one of the floor or ceiling to determine a 2D room shape (*e.g.,* using one or trained machine learning models), while in other embodiments the room shape determination may be performed in other manners (*e.g.*, by generating a 3D point cloud of some or all of the room walls and optionally the ceiling and/or floor, such as by analyzing at least visual data of the panorama image and optionally additional data captured by an image acquisition device or associated mobile computing device, optionally using one or more of SfM (Structure from Motion) or SLAM (Simultaneous Location And Mapping) or MVS (Multi-View Stereo) analysis). In addition, the activities of block 645 may further optionally determine and use initial pose information for each of those panorama images (*e.g.,* as supplied with acquisition metadata for the panorama image), and/or obtain and use additional metadata for each panorama image (*e.g.,* acquisition height information of the camera device or other image acquisition device used to acquire a panorama image relative to the floor and/or the ceiling). Additional details are included elsewhere herein regarding determining room shapes and identifying additional information for the rooms. After block 640, the routine continues to block 645, where it determines whether there are more rooms for which to determine room shapes based on images acquired in those rooms, and if so returns to block 640 to select the next such room for which to determine a room shape.

If it is instead determined in block 645 that there are not more rooms for which to generate room shapes, the routine continues to block 660 to determine whether to further generate at least a partial floor plan for the building (*e.g.,* based at least in part on the determined room shape(s) from block 640, and optionally further information regarding how to position the determined room shapes relative to each other). If not, such as when determining only one or more room shapes without generating further mapping information for a building (*e.g.,* to determine the room shape for a single room based on one or more images acquired in the room by the ICA system), the routine continues to block 688. Otherwise, the routine continues to block 665 to retrieve one or more room shapes (*e.g.,* room shapes generated in block 645) or otherwise obtain one or more room shapes (*e.g.,* based on human-supplied input) for rooms of the building, whether 2D or 3D room shapes, and then continues to block 670. In block 670, the routine uses the one or more room shapes to create an initial floor plan (*e.g.,* an initial 2D floor plan using 2D room shapes and/or an initial 3D floor plan using 3D room shapes), such as a partial floor plan that includes one or more room shapes but less than all room shapes for the building, or a complete floor plan that includes all room shapes for the building. If there are multiple room shapes, the routine in block 670 further determines positioning of the room shapes relative to each other, such as by using visual overlap between images from multiple acquisition locations to determine relative positions of those acquisition locations and of the room shapes surrounding those acquisition locations, and/or by using other types of information (*e.g.,* using connecting inter-room passages between rooms, optionally applying one or more constraints or optimizations, etc.). In at least some embodiments, the routine in block 670 further refines some or all of the room shapes by generating a binary segmentation mask that covers the relatively positioned room shape(s), extracting a polygon representing the outline or contour of the segmentation mask, and separating the polygon into the refined room shape(s). Such a floor plan may include, for example, relative position and shape information for the various rooms without providing any actual dimension information for the individual rooms or building as a whole, and may further include multiple linked or associated sub-maps (*e.g.,* to reflect different stories, levels, sections, etc.) of the building. The routine further optionally associates positions of the doors, wall openings and other identified wall elements on the floor plan.

After block 670, the routine optionally performs one or more steps 680-685 to determine and associate additional information with the floor plan. In block 680, the routine optionally estimates the dimensions of some or all of the rooms, such as from analysis of images and/or their acquisition metadata or from overall dimension information obtained for the exterior of the building, and associates the estimated dimensions with the floor plan - it will be appreciated that if sufficiently detailed dimension information were available, architectural drawings, blueprints, etc. may be generated from the floor plan. After block 680, the routine continues to block 683 to optionally associate further information with the floor plan (*e.g.,* with particular rooms or other locations within the building), such as additional existing images with specified positions and/or annotation information. In block 685, if the room shapes from block 645 are not 3D room shapes, the routine further optionally estimates heights of walls in some or all rooms, such as from analysis of images and optionally sizes of known objects in the images, as well as height information about a camera when the images were acquired, and uses that height information to generate 3D room shapes for the rooms. The routine further optionally uses the 3D room shapes (whether from block 640 or block 685) to generate a 3D computer model floor plan of the building, with the 2D and 3D floor plans being associated with each other - in other embodiments, only a 3D computer model floor plan may be generated and used (including to provide a visual representation of a 2D floor plan if so desired by using a horizontal slice of the 3D computer model floor plan).

After block 685, or if it is instead determined in block 660 not to determine a floor plan, the routine continues to block 688 to store the determined room shape(s) and/or generated mapping information and/or other generated information, to optionally provide some or all of that information to one or more recipients (*e.g.,* to block 440 of routine 400 if invoked from that block), and to optionally further use some or all of the determined and generated information, such as to provide the generated 2D floor plan and/or 3D computer model floor plan for display on one or more client devices and/or to one or more other devices for use in automating navigation of those devices and/or associated vehicles or other entities, to similarly provide and use information about determined room shapes and/or a linked set of panorama images and/or about additional information determined about contents of rooms and/or passages between rooms, etc.

If it is instead determined in block 635 that the information or instructions received in block 605 are not to generate mapping information for an indicated building, the routine continues instead to block 690 to perform one or more other indicated operations as appropriate. Such other operations may include, for example, receiving and responding to requests for previously generated floor plans and/or previously determined room shapes and/or other generated information (*e.g.,* requests for such information for display on one or more client devices, requests for such information to provide it to one or more other devices for use in automated navigation, etc.), obtaining and storing information about buildings for use in later operations (*e.g.,* information about dimensions, numbers or types of rooms, total square footage, adjacent or nearby other buildings, adjacent or nearby vegetation, exterior images, etc.), etc.

After blocks 688 or 690, the routine continues to block 695 to determine whether to continue, such as until an explicit indication to terminate is received, or instead only if an explicit indication to continue is received. If it is determined to continue, the routine returns to block 605 to wait for and receive additional instructions or information, and otherwise continues to block 699 and ends.

While not illustrated with respect to the automated operations shown in the example embodiment of Figures 6A-6B, in some embodiments human users may further assist in facilitating some of the operations of the MIGM system, such as for operator users and/or end users of the MIGM system to provide input of one or more types that is further used in subsequent automated operations. As non-exclusive examples, such human users may provide input of one or more types as follows: to provide input to assist with the linking of a set of images, such as to provide input in block 625 that is used as part of the automated operations for that block (*e.g.,* to specify or adjust initial automatically determined directions between one or more pairs of images, to specify or adjust initial automatically determined final global positions of some or all of the images relative to each other, etc.); to provide input in block 637 that is used as part of subsequent automated operations, such as one or more of the illustrated types of information about the building; to provide input with respect to block 640 that is used as part of subsequent automated operations, such as to specify or adjust initial automatically determined element locations and/or estimated room shapes and/or to manually combine information from multiple estimated room shapes for a room (*e.g.,* separate room shape estimates from different images acquired in the room) to create a final room shape for the room and/or to specify or adjust initial automatically determined information about a final room shape, etc.; to provide input with respect to block 670, that is used as part of subsequent operations, such as to specify or adjust initial automatically determined positions of room shapes within a floor plan being generated and/or to specify or adjust initial automatically determined room shapes themselves within such a floor plan; to provide input with respect to one or more of blocks 680 and 683 and 685 that is used as part of subsequent operations, such as to specify or adjust initial automatically determined information of one or more types discussed with respect to those blocks; and/or to specify or adjust initial automatically determined pose information (whether initial pose information or subsequent updated pose information) for one or more of the panorama images; etc. Additional details are included elsewhere herein regarding embodiments in which one or more human users provide input that is further used in additional automated operations of the BADUM system.

Figure 7 illustrates an example embodiment of a flow diagram for a Building Information Access system routine 700. The routine may be performed by, for example, execution of a building information access client computing device 175 and its software system(s) (not shown) of Figure 1, a client computing device 390 of Figure 3, and/or a building information access viewer or presentation system as described elsewhere herein, such as to receive and display building information (*e.g.,* images; floor plans and/or other mapping-related information, such as determined room structural layouts/shapes, a virtual tour of inter-linked images, etc.; generated building description information; etc.), to obtain and display information about images matching one or more indicated target images, to obtain and display guidance acquisition instructions (*e.g.,* with respect to other images acquired during an acquisition session and/or for an associated building, such as part of a displayed GUI), etc. In the example of Figure 7, the presented information is for a building (such as an interior of a house), but in other embodiments, other types of mapping information may be presented for other types of buildings or environments and used in other manners, as discussed elsewhere herein.

The illustrated embodiment of the routine begins at block 705, where instructions or information are received. At block 710, the routine determines whether the received instructions or information in block 705 are to display determined information for one or more target buildings, and if so continues to block 715 to determine whether the received instructions or information in block 705 are to select one or more target buildings using specified criteria (*e.g.,* based at least in part on an indicated building), and if not continues to block 720 to obtain an indication of a target building to use from the user (*e.g.,* based on a current user selection, such as from a displayed list or other user selection mechanism; based on information received in block 705; etc.). Otherwise, if it is determined in block 715 to select one or more target buildings from specified criteria, the routine continues instead to block 725, where it obtains indications of one or more search criteria to use, such as from current user selections or as indicated in the information or instructions received in block 705, and then searches stored information about buildings to determine one or more of the buildings that satisfy the search criteria or otherwise obtains indications of one or more such matching buildings, such as information that is currently or previously generated by the BADUM system (with one example of operations of such a system being further discussed with respect to Figures 4A-4B, and with the BADUM system optionally invoked in block 720 to obtain such information). In the illustrated embodiment, the routine then further selects a best match target building from the one or more returned buildings (*e.g.,* the returned other building with the highest similarity or other matching rating for the specified criteria, or using another selection technique indicated in the instructions or other information received in block 705), while in other embodiments the routine may instead present multiple candidate buildings that satisfy the search criteria (*e.g.,* in a ranked order based on degree of match) and receive a user selection of the target building from the multiple candidates.

After blocks 720 or 725, the routine continues to block 735 to retrieve information for the target building (*e.g.,* a floor plan; other generated mapping information for the building, such as a group of inter-linked images for use as part of a virtual tour; generated building description information; etc.), and optionally indications of associated linked information for the building interior and/or a surrounding location external to the building, and/or information about one or more generated explanations or other descriptions of the target building, and selects an initial view of the retrieved information (*e.g.,* a view of the floor plan, a particular room shape, a particular image, some or all of the generated building description information, etc.). In block 740, the routine then displays or otherwise presents the current view of the retrieved information, and waits in block 745 for a user selection. After a user selection in block 745, if it is determined in block 750 that the user selection corresponds to adjusting the current view for the current target building (*e.g.,* to change one or more aspects of the current view), the routine continues to block 755 to update the current view in accordance with the user selection, and then returns to block 740 to update the displayed or otherwise presented information accordingly. The user selection and corresponding updating of the current view may include, for example, displaying or otherwise presenting a piece of associated linked information that the user selects (*e.g.,* a particular image associated with a displayed visual indication of a determined acquisition location, such as to overlay the associated linked information over at least some of the previous display; a particular other image linked to a current image and selected from the current image using a user-selectable control overlaid on the current image to represent that other image; etc.), and/or changing how the current view is displayed (*e.g.,* zooming in or out; rotating information if appropriate; selecting a new portion of the floor plan to be displayed or otherwise presented, such as with some or all of the new portion not being previously visible, or instead with the new portion being a subset of the previously visible information; etc.). If it is instead determined in block 750 that the user selection is not to display further information for the current target building (*e.g.,* to display information for another building, to end the current display operations, etc.), the routine continues instead to block 795, and returns to block 705 to perform operations for the user selection if the user selection involves such further operations.

If it is instead determined in block 710 that the instructions or other information received in block 705 are not to present information representing a building, the routine continues instead to block 760 to determine whether the instructions or other information received in block 705 indicate to identify other images (if any) corresponding to one or more indicated target images, and if so continues to blocks 765-770 to perform such activities. In particular, the routine in block 765 receives the indications of the one or more target images for the matching (such as from information received in block 705 or based on one or more current interactions with a user) along with one or more matching criteria (*e.g.,* an amount of visual overlap), and in block 770 identifies one or more other images (if any) that match the indicated target image(s), such as by interacting with the ICA and/or MIGM systems to obtain the other image(s). The routine then displays or otherwise provides information in block 770 about the identified other image(s), such as to provide information about them as part of search results, to display one or more of the identified other image(s), etc. If it is instead determined in block 760 that the instructions or other information received in block 705 are not to identify other images corresponding to one or more indicated target images, the routine continues instead to block 775 to determine whether the instructions or other information received in block 705 correspond to obtaining and providing guidance acquisition instructions during an image acquisition session with respect to one or more indicated target images (*e.g.,* a most recently acquired image), and if so continues to block 780, and otherwise continues to block 790. In block 780, the routine obtains information about guidance acquisition instructions of one or more types, such as by interacting with the ICA system, and displays or otherwise provides information in block 780 about the guidance acquisition instructions, such as by overlaying the guidance acquisition instructions on a partial floor plan and/or recently acquired image in manners discussed in greater detail elsewhere herein.

In block 790, the routine continues instead to perform other indicated operations as appropriate, such as to configure parameters to be used in various operations of the system (*e.g.,* based at least in part on information specified by a user of the system, such as a user of a mobile device who acquires one or more building interiors, an operator user of the BADUM and/or MIGM systems, etc., including for use in personalizing information display for a particular user in accordance with his/her preferences), to obtain and store other information about users of the system, to respond to requests for generated and stored information, to perform any housekeeping tasks, etc.

Following blocks 770 or 780 or 790, or if it is determined in block 750 that the user selection does not correspond to the current building, the routine proceeds to block 795 to determine whether to continue, such as until an explicit indication to terminate is received, or instead only if an explicit indication to continue is received. If it is determined to continue (including if the user made a selection in block 745 related to a new building to present), the routine returns to block 705 to await additional instructions or information (or to continue directly on to block 735 if the user made a selection in block 745 related to a new building to present), and if not proceeds to step 799 and ends.

Non-exclusive example embodiments described herein are further described in the following clauses.
A01. A computer-implemented method for one or more computing devices to perform automated operations comprising:
   obtaining, by one or more computing devices, data about a house with multiple rooms, including a plurality of images acquired at the house, a floor plan for the house that includes a room layout with at least two-dimensional room shapes and relative positions of the multiple rooms, and a textual description of the house;
   generating, by the one or more computing devices, additional information about the house based on the obtained data, including:
      analyzing, by the one or more computing devices and using one or more trained first neural networks models, the plurality of images to identify multiple objects inside the house, to determine attributes of the multiple objects, and to determine positions of the multiple objects within the multiple rooms;
      analyzing, by the one or more computing devices and using one or more trained second neural network models, the floor plan to determine further attributes of the house that each corresponds to a characteristic of the room layout; and
      generating, by the one or more computing devices and using one or more trained language models, a further textual description of the house that is based at least in part on the determined attributes and the determined further attributes,
      wherein the generated additional information includes the generated further textual description and the determined attributes and the determined further attributes;
   updating, by the one or more computing devices, the textual description of the house to add data from the generated additional information to contents of the textual description;
   receiving, by the one or more computing devices, one or more search criteria;
   determining, by the one or more computing devices and based on at least some of the added data from the generated additional information in the updated textual description, that the house matches the one or more search criteria; and
   presenting, by the one or more computing devices and in response to the determining, search results that indicate the house and include at least some of the updated textual description with the added data from the generated additional information.
A02. A computer-implemented method for one or more computing devices to perform automated operations comprising:
   obtaining, by one or more computing devices, data about an indicated building with multiple rooms, including a plurality of images acquired at the indicated building and a floor plan for the indicated building having information about the multiple rooms that includes at least two-dimensional room shapes and relative positions of the multiple rooms;
   generating, by the one or more computing devices, additional information about the indicated building based on the obtained data, including:
      determining, by the one or more computing devices and using one or more trained machine learning models, a plurality of attributes about the indicated building that are part of the additional information, including analyzing the plurality of images to determine some of the plurality of attributes based at least in part on objects identified in the plurality of images, and further including analyzing the floor plan to determine one or more additional attributes of the plurality of attributes; and
      generating, by the one or more computing devices and using one or more trained language models, a textual description of the indicated building that is part of the additional information and is based at least in part on the determined plurality of attributes;
   determining, by the one or more computing devices, that the indicated building matches one or more indicated criteria based on at least some of the generated additional information; and
   presenting, by the one or more computing devices and in response to the determining that the indicated building matches the one or more indicated criteria, the at least some of the generated additional information about the indicated building.
A03. A computer-implemented method for one or more computing devices to perform automated operations comprising:
   obtaining data about an indicated building with multiple rooms, including a plurality of images acquired at the indicated building, a floor plan for the indicated building having information about the multiple rooms that includes at least two-dimensional room shapes and relative positions of the multiple rooms, and a textual description of the building;
   generating additional information about the indicated building based on the obtained data, including:
      determining a plurality of attributes about the indicated building that are part of the additional information, including analyzing the plurality of images to determine some of the plurality of attributes based at least in part on objects identified in the plurality of images, and further including analyzing the floor plan to determine one or more additional attributes of the plurality of attributes; and
      generating, using one or more trained language models, a further textual description of the indicated building that is part of the additional information and is based at least in part on the determined plurality of attributes;
   updating the textual description of the building by adding at least some of the generated additional information; and
   providing information about the indicated building that includes the at least some generated additional information.
A04. A computer-implemented method for one or more computing devices to perform automated operations comprising:
   obtaining, by the one or more computing devices, data about an indicated building with multiple rooms, including a plurality of images acquired at the indicated building and a floor plan for the indicated building having information about the multiple rooms that includes at least two-dimensional room shapes and relative positions of the multiple rooms;
   generating, by the one or more computing devices, additional information about the indicated building based on the obtained data, including:
      determining, by the one or more computing devices and using one or more trained machine learning models, a plurality of attributes about the indicated building that are part of the additional information, including performing at least one of analyzing the plurality of images to determine attributes based at least in part on objects identified in the plurality of images, or of analyzing the floor plan to determine one or more attributes that each corresponds to at least two rooms of the multiple rooms; and
      generating, by the one or more computing devices and using one or more trained language models, a textual description of the indicated building that is part of the additional information and is based at least in part on the determined plurality of attributes;
   determining, by the one or more computing devices, that the indicated building matches one or more indicated criteria based on at least some of the generated additional information; and
   providing, by the one or more computing devices, the at least some of the generated additional information about the indicated building.
A05. The computer-implemented method of any one of clauses A01-A04 wherein the updating of the textual description of the house further includes validating, by the one or more computing devices, some of the contents of the existing textual description based on the generated additional information, and correcting, by the one or more computing devices, other of the contents of the existing textual description based on the generated additional information, and wherein the presenting of the search results further includes presenting the updated textual description with one or more indications of at least one of the validating or the correcting.
A06. The computer-implemented method of any one of clauses A01-A05 wherein the identified multiple objects in the house include at least appliances and fixtures and structural elements, wherein the determined attributes of the multiple objects include colors and types of surface materials, wherein the determined further attributes of the house include both objective attributes about the house that are able to be independently verified and subjective attributes for the house that are predicted by the one or more trained second neural network models, wherein the search criteria include indications of one or more colors and one or more types of surface materials and one or more types of objects, and wherein the determining that the house matches the one or more search criteria is based on one or more of the identified multiple objects and on one or more of the determined attributes of the multiple objects and on one or more subjective attributes of the determined further attributes.
A07. The computer-implemented method of clause A06 wherein the one or more subjective attributes include at least one of an atypical floor plan that differs from typical floor plans, or an open floor plan, or an accessible floor plan, or a non-standard floor plan, wherein the search criteria further include indications of one or more positions of the one or more types of objects, wherein the determining that the house matches the one or more search criteria is further based on the determined positions of the one or more identified objects within the multiple rooms, and wherein the method further comprises, before the generating of the additional information about the house:
   training, by the one or more computing devices, the one or more second neural network models to identify the objective and subjective attributes;
   training, by the one or more computing devices, the one or more first neural network models to identify objects and to determine attributes of objects and to determine positions of objects; and
   training, by the one or more computing devices, the one or more language models to generate textual descriptions based on attributes of houses.
A08. The computer-implemented method of any one of clauses A01-A07 further comprising receiving one or more search criteria that include the one or more indicated criteria, wherein the determining that the indicated building matches the one or more indicated criteria is performed as part of determining search results that satisfy the one or more search criteria and include the indicated building, and wherein the presenting of the at least some of the generated additional information about the indicated building includes transmitting, by the one or more computing devices and over one or more computer networks, the determined search results to one or more client devices for display on the one or more client devices.
A09. The computer-implemented method of any one of clauses A01-A08 further comprising:
   obtaining, by the one or more computing devices, an existing textual description of the indicated building that is separate from the generated textual description; and
   performing, by the one or more computing devices, at least one of validating contents of the existing textual description based on the generated additional information, or updating the contents of the existing textual description to add data from the generated additional information,
   and wherein the presenting of the at least some of the generated additional information about the indicated building includes presenting the existing textual description with the at least one of the validated contents or the updated contents.
A10. The computer-implemented method of any one of clauses A01-A09 wherein the one or more trained machine learning models include one or more first neural networks used for the analyzing of the plurality of images and one or more second neural networks used for the analyzing of the floor plan, and
   wherein the method further comprises training, by the one or more computing devices and before the generating of the additional information, the one or more first neural networks to identify objects and determine positions of the identified objects, and the one or more second neural networks to determine building characteristics that are each based on room layout of a plurality of rooms, and
   wherein the generating of the additional information includes:
      identifying, by the one or more computing devices using the trained one or more first neural networks, multiple objects inside the indicated building;
      determining, by the one or more computing devices using the trained one or more first neural networks, positions of the multiple objects within the multiple rooms; and
      determining, by the one or more computing devices using the trained one or more second neural networks, multiple building characteristics that each corresponds to a characteristic of the room layout.
A11. The computer-implemented method of any one of clauses A01-A10 wherein the one or more computing devices includes a server computing device that performs the automated operations, wherein the one or more computing devices further include a client computing device of a user, and wherein the automated operations include additional automated operations including at least:
   receiving, by the server computing device, one or more search criteria from the client computing device;
   determining, by the server computing device, search results for the search criteria that include the indicated building based at least in part on the at least some generated additional information;
   performing, by the server computing device, the providing of the information about the indicated building by transmitting the information about the indicated building over one or more computer networks to the client computing device, the transmitted information including the determined search results; and
   receiving, by the client computing device, the transmitted information including the determined search results, and displaying the determined search results on the client computing device.
A12. The computer-implemented method of any one of clauses A01-A11 wherein the determining of the plurality of attributes includes using one or more trained machine learning models, and wherein the providing of the information about the indicated building includes presenting the updated textual description for the indicated building.
A13. The computer-implemented method of clause A12 wherein the one or more trained machine learning models include one or more first neural networks used for the analyzing of the plurality of images and one or more second neural networks used for the analyzing of the floor plan, and
   wherein the automated operations further include training, before the generating of the additional information, the one or more first neural networks to identify objects and determine positions of the identified objects, and the one or more second neural networks to determine building characteristics that are each based on room layout of a plurality of rooms, and
   wherein the generating of the additional information includes:
      identifying, using the trained one or more first neural networks, multiple objects inside the indicated building;
      determining, using the trained one or more first neural networks, positions of the multiple objects within the multiple rooms; and
      determining, using the trained one or more second neural networks, multiple building characteristics that each corresponds to a characteristic of the room layout.
A14. The computer-implemented method of any one of clauses A01-A13 wherein the automated operations further include receiving one or more search criteria from the client computing device, and wherein the determining that the indicated building matches the one or more indicated criteria is performed as part of determining search results that satisfy the one or more search criteria and include the indicated building.
A15. The computer-implemented method of any one of clauses A01-A14 wherein the automated operations further include:
   obtaining, by the one or more computing devices, an existing textual description of the indicated building that is separate from the generated textual description; and
   updating, by the one or more computing devices, contents of the existing textual description to add data from the generated additional information,
   and wherein the providing of the at least some of the generated additional information about the indicated building includes providing the existing textual description with the updated contents.
A16. The computer-implemented method of any one of clauses A01-A15 wherein the automated operations further include:
   obtaining, by the one or more computing devices, an existing textual description of the indicated building that is separate from the generated textual description; and
   validating, by the one or more computing devices, contents of the existing textual description based on the generated additional information,
   and wherein the providing of the at least some of the generated additional information about the indicated building includes providing the existing textual description with an indication of the validated contents or the updated contents.
A17. The computer-implemented method of any one of clauses A01-A16 wherein the generating of the additional information includes performing the analyzing of the images to determine some of the plurality of attributes and performing the analyzing of the floor plan to determine one or more additional attributes of the plurality of attributes, and further includes:
   identifying, by the one or more computing devices, multiple objects inside the indicated building;
   determining, by the one or more computing devices, positions of the multiple objects within the multiple rooms; and
   determining, by the one or more computing devices, multiple building characteristics that each corresponds to a characteristic of the room layout.
A18. The computer-implemented method of clause A17 wherein the one or more trained machine learning models include one or more first neural networks used for the analyzing of the plurality of images and one or more second neural networks used for the analyzing of the floor plan, wherein the automated operations further include training, by the one or more computing devices and before the generating of the additional information, the one or more first neural networks to identify objects and determine positions of the identified objects, and the one or more second neural networks to determine building characteristics that are each based on room layout of a plurality of rooms, wherein the identifying of the multiple objects and the determining of the positions of the multiple objects are performed using the trained one or more first neural networks, and wherein the determining of the multiple building characteristics is performed using the trained one or more second neural networks.
A19. The computer-implemented method of any one of clauses A01-A18 wherein the at least some of the generated additional information used for the determining that the indicated building matches the one or more indicated criteria includes one or more attributes of the determined plurality of attributes, and wherein the providing of the at least some generated additional information about the indicated building includes identifying the indicated building and including information about the one or more attributes of the indicated building.
A20. The computer-implemented method of any one of clauses A01-A19 wherein the at least some of the generated additional information used for the determining that the indicated building matches the one or more indicated criteria includes one or more attributes of the determined plurality of attributes, and wherein the one or more attributes used as part of the determining that the indicated building matches the one or more indicated criteria include one or more subjective attributes generated from the analyzing of the floor plan, the one or more subjective attributes including at least one of an open floor plan, or an accessible floor plan, or a non-standard floor plan.
A21. The computer-implemented method of any one of clauses A01-A20 wherein the at least some of the generated additional information used for the determining that the indicated building matches the one or more indicated criteria includes one or more attributes of the determined plurality of attributes, and wherein the one or more attributes used as part of the determining that the indicated building matches the one or more indicated criteria include one or more local attributes that are generated from the analyzing of the plurality of images and are each associated with one of the multiple rooms, and at least one global attribute that is generated from the analyzing of the floor plan and is associated with all of the indicated building.
A22. The computer-implemented method of any one of clauses A01-A21 wherein the at least some of the generated additional information used for the determining that the indicated building matches the one or more indicated criteria includes one or more attributes of the determined plurality of attributes, and wherein the plurality of images include one or more images acquired external to the indicated building, and wherein the one or more attributes used as part of the determining that the indicated building matches the one or more indicated criteria include an architectural style of the indicated building that is based at least in part on the indicated building.
A23. The computer-implemented method of any one of clauses A01-A22 wherein the at least some of the generated additional information used for the determining that the indicated building matches the one or more indicated criteria includes one or more attributes of the determined plurality of attributes, and wherein the plurality of images include multiple images acquired inside the indicated building, and wherein the one or more attributes used as part of the determining that the indicated building matches the one or more indicated criteria include one or more architectural features of an interior of the indicated building, the one or more architectural features including at least one of a type of floor of one of the multiple rooms, or a type of ceiling of one of the multiple rooms, or a type of built-in structural element of at least one of the multiple rooms.
A24. The computer-implemented method of any one of clauses A01-A23 wherein the determining of the plurality of attributes includes performing the analyzing the plurality of images to determine attributes based at least in part on objects identified in the plurality of images, and wherein the one or more attributes used as part of the determining that the indicated building matches the one or more indicated criteria include at least one of one or more of the objects, or a color and a type of surface material for each of one or more of the objects.
A25. The computer-implemented method of any one of clauses A01-A24 wherein the obtaining of the data about the indicated building further includes acquiring, using one or more cameras, the plurality of images at a plurality of acquisition locations associated with the indicated building, and generating, by the one or more computing devices, the floor plan based at least in part on analysis of visual data of the plurality of images.
A26. The computer-implemented method of any one of clauses A01-A25 wherein the automated operations further include storing and using one or more data structures including at least one of the one or more trained machine learning models, or of the one or more trained language models.
A27. The computer-implemented method of any one of clauses A01-A26 wherein the generating of the textual description of the indicated building includes using one or more language models that are trained to use, as input, at least information about the determined plurality of attributes, wherein the one or more language models include at least one of a Vision and Language Model (VLM) that is trained using image/caption tuples, or a Knowledge Enhanced Natural Language Generation (VENLG) model that is trained using one or more defined knowledge sources, or a language model that uses a knowledge graph in which nodes represent entities and edges represent predicate relationships.
A28. A computer-implemented method comprising multiple steps to perform automated operations that implement described techniques substantially as disclosed herein.
B01. A non-transitory computer-readable medium having stored executable software instructions and/or other stored contents that cause one or more computing systems to perform automated operations that implement the method of any of clauses A01-A28.
B02. A non-transitory computer-readable medium having stored executable software instructions and/or other stored contents that cause one or more computing systems to perform automated operations that implement described techniques substantially as disclosed herein.
C01. One or more computing systems comprising one or more hardware processors and one or more memories with stored instructions that, when executed by at least one of the one or more hardware processors, cause the one or more computing systems to perform automated operations that implement the method of any of clauses A01-A28.
C02. One or more computing systems comprising one or more hardware processors and one or more memories with stored instructions that, when executed by at least one of the one or more hardware processors, cause the one or more computing systems to perform automated operations that implement described techniques substantially as disclosed herein.
D01. A computer program adapted to perform the method of any of clauses A01-A28 when the computer program is run on a computer.

Aspects of the present disclosure are described herein with reference to flowchart illustrations and/or block diagrams of methods, apparatus (systems), and computer program products according to embodiments of the present disclosure. It will be appreciated that each block of the flowchart illustrations and/or block diagrams, and combinations of blocks in the flowchart illustrations and/or block diagrams, can be implemented by computer readable program instructions. It will be further appreciated that in some implementations the functionality provided by the routines discussed above may be provided in alternative ways, such as being split among more routines or consolidated into fewer routines. Similarly, in some implementations illustrated routines may provide more or less functionality than is described, such as when other illustrated routines instead lack or include such functionality respectively, or when the amount of functionality that is provided is altered. In addition, while various operations may be illustrated as being performed in a particular manner (e.g., in serial or in parallel, or synchronous or asynchronous) and/or in a particular order, in other implementations the operations may be performed in other orders and in other manners. Any data structures discussed above may also be structured in different manners, such as by having a single data structure split into multiple data structures and/or by having multiple data structures consolidated into a single data structure. Similarly, in some implementations illustrated data structures may store more or less information than is described, such as when other illustrated data structures instead lack or include such information respectively, or when the amount or types of information that is stored is altered.

From the foregoing it will be appreciated that, although specific embodiments have been described herein for purposes of illustration, various modifications may be made without deviating from the spirit and scope of the invention. Accordingly, the invention is not limited except as by corresponding claims and the elements recited by those claims. In addition, while certain aspects of the invention may be presented in certain claim forms at certain times, the inventors contemplate the various aspects of the invention in any available claim form. For example, while only some aspects of the invention may be recited as being embodied in a computer-readable medium at particular times, other aspects may likewise be so embodied.

## Claims

1. A computer-implemented method comprising:
obtaining, by one or more computing devices, data about an indicated building with multiple rooms, including a plurality of images acquired at the indicated building and a floor plan for the indicated building having information about the multiple rooms that includes at least two-dimensional room shapes and relative positions of the multiple rooms;
generating, by the one or more computing devices, additional information about the indicated building based on the obtained data, including:
determining, by the one or more computing devices and using one or more trained machine learning models, a plurality of attributes about the indicated building that are part of the additional information, including analyzing the plurality of images to determine some of the plurality of attributes based at least in part on objects identified in the plurality of images, and further including analyzing the floor plan to determine one or more additional attributes of the plurality of attributes; and
generating, by the one or more computing devices and using one or more trained language models, a textual description of the indicated building that is part of the additional information and is based at least in part on the determined plurality of attributes;
determining, by the one or more computing devices, that the indicated building matches one or more indicated criteria based on at least some of the generated additional information; and
presenting, by the one or more computing devices and in response to the determining that the indicated building matches the one or more indicated criteria, the at least some of the generated additional information about the indicated building.

2. The computer-implemented method of claim 1 further comprising receiving one or more search criteria that include the one or more indicated criteria, wherein the determining that the indicated building matches the one or more indicated criteria is performed as part of determining search results that satisfy the one or more search criteria and include the indicated building, and wherein the presenting of the at least some of the generated additional information about the indicated building includes transmitting, by the one or more computing devices and over one or more computer networks, the determined search results to one or more client devices for display on the one or more client devices.

3. The computer-implemented method of claim 1 further comprising:
obtaining, by the one or more computing devices, an existing textual description of the indicated building that is separate from the generated textual description; and
performing, by the one or more computing devices, at least one of validating contents of the existing textual description based on the generated additional information, or updating the contents of the existing textual description to add data from the generated additional information,
and wherein the presenting of the at least some of the generated additional information about the indicated building includes presenting the existing textual description with the at least one of the validated contents or the updated contents.

4. The computer-implemented method of claim 1 wherein the one or more trained machine learning models include one or more first neural networks used for the analyzing of the plurality of images and one or more second neural networks used for the analyzing of the floor plan, and
wherein the method further comprises training, by the one or more computing devices and before the generating of the additional information, the one or more first neural networks to identify objects and determine positions of the identified objects, and the one or more second neural networks to determine building characteristics that are each based on room layout of a plurality of rooms, and
wherein the generating of the additional information includes:
identifying, by the one or more computing devices using the trained one or more first neural networks, multiple objects inside the indicated building;
determining, by the one or more computing devices using the trained one or more first neural networks, positions of the multiple objects within the multiple rooms; and
determining, by the one or more computing devices using the trained one or more second neural networks, multiple building characteristics that each corresponds to a characteristic of the room layout.

5. A system comprising:
one or more hardware processors of one or more computing devices; and
one or more memories with stored instructions that, when executed by at least one of the one or more hardware processors, cause at least one of the one or more computing devices to perform automated operations including at least:
obtaining data about an indicated building with multiple rooms, including a plurality of images acquired at the indicated building, a floor plan for the indicated building having information about the multiple rooms that includes at least two-dimensional room shapes and relative positions of the multiple rooms, and a textual description of the building;
generating additional information about the indicated building based on the obtained data, including:
determining a plurality of attributes about the indicated building that are part of the additional information, including analyzing the plurality of images to determine some of the plurality of attributes based at least in part on objects identified in the plurality of images, and further including analyzing the floor plan to determine one or more additional attributes of the plurality of attributes; and
generating, using one or more trained language models, a further textual description of the indicated building that is part of the additional information and is based at least in part on the determined plurality of attributes;
updating the textual description of the building by adding at least some of the generated additional information; and
providing information about the indicated building that includes the at least some generated additional information.

6. The system of claim 5 wherein the at least one computing device includes a server computing device and wherein the one or more computing devices further include a client computing device of a user, and wherein the stored instructions include software instructions that, when executed by the one or more computing devices, cause the one or more computing devices to perform further automated operations including:
receiving, by the server computing device, one or more search criteria from the client computing device;
determining, by the server computing device, search results for the search criteria that include the indicated building based at least in part on the at least some generated additional information;
performing, by the server computing device, the providing of the information about the indicated building by transmitting the information about the indicated building over one or more computer networks to the client computing device, the transmitted information including the determined search results; and
receiving, by the client computing device, the transmitted information including the determined search results, and displaying the determined search results on the client computing device.

7. The system of claim 5 wherein the determining of the plurality of attributes includes using one or more trained machine learning models, and wherein the providing of the information about the indicated building includes presenting the updated textual description for the indicated building.

8. The system of claim 7 wherein the one or more trained machine learning models include one or more first neural networks used for the analyzing of the plurality of images and one or more second neural networks used for the analyzing of the floor plan, and
wherein the automated operations further include training, before the generating of the additional information, the one or more first neural networks to identify objects and determine positions of the identified objects, and the one or more second neural networks to determine building characteristics that are each based on room layout of a plurality of rooms, and
wherein the generating of the additional information includes:
identifying, using the trained one or more first neural networks, multiple objects inside the indicated building;
determining, using the trained one or more first neural networks, positions of the multiple objects within the multiple rooms; and
determining, using the trained one or more second neural networks, multiple building characteristics that each corresponds to a characteristic of the room layout.

9. A non-transitory computer-readable medium having stored contents that cause one or more computing devices to perform automated operations, the automated operations including at least:
obtaining, by the one or more computing devices, data about an indicated building with multiple rooms, including a plurality of images acquired at the indicated building and a floor plan for the indicated building having information about the multiple rooms that includes at least two-dimensional room shapes and relative positions of the multiple rooms;
generating, by the one or more computing devices, additional information about the indicated building based on the obtained data, including:
determining, by the one or more computing devices and using one or more trained machine learning models, a plurality of attributes about the indicated building that are part of the additional information, including performing at least one of analyzing the plurality of images to determine attributes based at least in part on objects identified in the plurality of images, or of analyzing the floor plan to determine one or more attributes that each corresponds to at least two rooms of the multiple rooms; and
generating, by the one or more computing devices and using one or more trained language models, a textual description of the indicated building that is part of the additional information and is based at least in part on the determined plurality of attributes;
determining, by the one or more computing devices, that the indicated building matches one or more indicated criteria based on at least some of the generated additional information; and
providing, by the one or more computing devices, the at least some of the generated additional information about the indicated building.

10. The non-transitory computer-readable medium of claim 9 wherein the stored contents include software instructions that, when executed by the one or more computing devices, cause the one or more computing devices to perform further automated operations including receiving one or more search criteria from the client computing device, and wherein the determining that the indicated building matches the one or more indicated criteria is performed as part of determining search results that satisfy the one or more search criteria and include the indicated building.

11. The non-transitory computer-readable medium of claim 9 wherein the automated operations further include:
obtaining, by the one or more computing devices, an existing textual description of the indicated building that is separate from the generated textual description; and
updating, by the one or more computing devices, contents of the existing textual description to add data from the generated additional information,
and wherein the providing of the at least some of the generated additional information about the indicated building includes transmitting, by the one or more computing devices and over one or more computer networks to one or more client devices for display on the one or more client devices, the at least some of the generated additional information about the indicated building, including the existing textual description with the updated contents.

12. The non-transitory computer-readable medium of claim 9 wherein the automated operations further include:
obtaining, by the one or more computing devices, an existing textual description of the indicated building that is separate from the generated textual description; and
validating, by the one or more computing devices, contents of the existing textual description based on the generated additional information,
and wherein the providing of the at least some of the generated additional information about the indicated building includes providing the existing textual description with an indication of the validated contents or the updated contents.

13. The non-transitory computer-readable medium of claim 9 wherein the generating of the additional information includes performing the analyzing of the images to determine some of the plurality of attributes and performing the analyzing of the floor plan to determine one or more additional attributes of the plurality of attributes, and further includes:
identifying, by the one or more computing devices, multiple objects inside the indicated building;
determining, by the one or more computing devices, positions of the multiple objects within the multiple rooms; and
determining, by the one or more computing devices, multiple building characteristics that each corresponds to a characteristic of the room layout.

14. The non-transitory computer-readable medium of claim 13 wherein the one or more trained machine learning models include one or more first neural networks used for the analyzing of the plurality of images and one or more second neural networks used for the analyzing of the floor plan, wherein the automated operations further include training, by the one or more computing devices and before the generating of the additional information, the one or more first neural networks to identify objects and determine positions of the identified objects, and the one or more second neural networks to determine building characteristics that are each based on room layout of a plurality of rooms, wherein the identifying of the multiple objects and the determining of the positions of the multiple objects are performed using the trained one or more first neural networks, and wherein the determining of the multiple building characteristics is performed using the trained one or more second neural networks.

15. The non-transitory computer-readable medium of claim 9 wherein the at least some of the generated additional information used for the determining that the indicated building matches the one or more indicated criteria includes one or more attributes of the determined plurality of attributes, and wherein the automated operations further include at least one of:
performing the providing of the at least some generated additional information about the indicated building by identifying the indicated building and including information about the one or more attributes of the indicated building; or .
performing the determining that the indicated building matches the one or more indicated criteria by determining that the indicated building matches one or more subjective attributes generated from the analyzing of the floor plan, the one or more subjective attributes including at least one of an open floor plan, or an accessible floor plan, or a non-standard floor plan; or
performing the determining that the indicated building matches the one or more indicated criteria by determining that the indicated building matches one or more local attributes that are generated from the analyzing of the plurality of images and are each associated with one of the multiple rooms, and at least one global attribute that is generated from the analyzing of the floor plan and is associated with all of the indicated building; or
performing the determining that the indicated building matches the one or more indicated criteria by determining that the indicated building matches an indicated architectural style based at least in part on analyzing one or more images acquired external to the indicated building, the one or more images acquired external to the indicated building being at least some of the plurality of images; or
multiple images acquired inside the indicated building, and performing the determining that the indicated building matches the one or more indicated criteria by determining that the indicated building matches one or more architectural features of an interior of the indicated building, wherein the one or more architectural features are determined based at least in part on analyzing multiple images of the plurality of images that are acquired external to the indicated building, and wherein the one or more architectural features include at least one of a type of floor of one of the multiple rooms, or a type of ceiling of one of the multiple rooms, or a type of built-in structural element of at least one of the multiple rooms.

16. The non-transitory computer-readable medium of claim 9 wherein the obtaining of the data about the indicated building further includes acquiring, using one or more cameras, the plurality of images at a plurality of acquisition locations associated with the indicated building, and generating, by the one or more computing devices, the floor plan based at least in part on analysis of visual data of the plurality of images, wherein the determining of the plurality of attributes includes performing the analyzing the plurality of images to determine attributes based at least in part on objects identified in the plurality of images, and wherein the one or more attributes used as part of the determining that the indicated building matches the one or more indicated criteria include at least one of one or more of the objects, or a color and a type of surface material for each of one or more of the objects.
